# EUROPEAN PATENT APPLICATION

(11) **EP 4 376 539 A1**
(43) Date of publication of application: **29.05.2024**
(21) Application number: 22845050.8
(22) Date of filing: 17.06.2022
(51) Int. Cl.: H04W 76/00, H04W 4/06

(54) **MULTICAST SESSION PROCESSING METHOD, NETWORK FUNCTION ENTITY, APPARATUS, AND STORAGE MEDIUM**

(30) Priority: 23.07.2021 CN 202110839157
(71) Applicant: Datang Mobile Communications Equipment Co., Ltd., Beijing 100085 (CN)
(72) Inventor: DUAN, Xiaoyan, Beijing 100085 (CN)
(74) Representative: Studio Torta S.p.A.
(86) International application number: PCT/CN2022/099440
(87) International publication number: WO 2023/000884

(57) **Abstract**

Embodiments of the present application provide a multicast session processing method, a network function entity, an apparatus, and a storage medium. The method comprises: receiving a first request sent by a user equipment (UE), the first request being a registration request message or a service request message; obtaining multicast session information of the UE according to the first request; and executing, according to the multicast session information, a processing operation related to a multicast session. According to the multicast session processing method provided in the present application, the synchronization of a multicast session state between the UE and a network is realized by means of the registration request or a service request, thereby reducing the signaling interaction required for the UE to process a multicast session service, improving the signaling efficiency, saving signaling resources, and shortening the duration for the UE to join or leave the multicast session and to receive or transmit multicast session data.

## Description

### CROSS-REFERENCE TO RELATED APPLICATION

The present application claims priority to Chinese patent application No. 2021108391573 filed on July 23, 2021, entitled "Multicast Session Processing Method, Network Function Entity, Apparatus, and Storage Medium", which is hereby incorporated by reference in its entirety.

### FIELD

The present application relates to the field of communication, and in particular, to methods for processing a multicast broadcast session, network function entities, apparatuses for processing a multicast broadcast session, and a storage medium.

### BACKGROUND

A user equipment (UE) needs to join a multicast broadcast session to receive specific multicast broadcast service data.

In the related art, if UE is in an RRC_idle state or in an RRC_active state, since the UE moves or for other reasons, such as network slice changes, a radio access network (RAN) node or even a core network (CN) node serving the UE changes, the UE needs to firstly finish a registration update procedure or service request procedure, and then initiates a protocol data unit (PDU) session modification procedure, and after that the UE may receive data of a multicast broadcast session or leave a multicast broadcast session.

However, in a traditional solution, the UE needs to perform a lot of signaling interactions with a network to receive data of a multicast broadcast session or leave a multicast broadcast session, which leads to a waste of resources and low efficiency.

### SUMMARY

Embodiments of the present application provide methods for processing a multicast broadcast session, network function entities, apparatuses for processing a multicast broadcast session and a storage medium, to solve a defect in the related art that a user equipment (UE) needs to perform a lot of signaling interactions with a network to receive data of a multicast broadcast session or leave the joined multicast broadcast session, which improves signaling efficiency, and saves signaling resources.

An embodiment of the present application provides a method for processing a multicast broadcast session, applied to a first access and mobility management function (AMF), including:
receiving a first request transmitted from a user equipment (UE), where the first request is a registration request message or a service request message;
obtaining multicast broadcast session information of the UE based on the first request; and
performing a processing operation related to a multicast broadcast session based on the multicast broadcast session information.

In an embodiment, in case that the first request carries the multicast broadcast session information of the UE, the obtaining the multicast broadcast session information of the UE based on the first request includes:
obtaining the multicast broadcast session information of the UE from the first request.

In an embodiment, the obtaining the multicast broadcast session information of the UE based on the first request includes:
obtaining the multicast broadcast session information of the UE from a second AMF based on the first request, where the second AMF is a network function entity that provides service to the UE before the UE moves, and the first AMF is a network function entity that provides service to the UE after the UE moves.

In an embodiment, the multicast broadcast session information includes a first multicast broadcast service (MBS) session identifier (ID) and/or indication information, where the indication information is used to indicate that the UE remains joined in, leaves, or requests to join a first multicast broadcast session, and the first multicast broadcast session is a multicast broadcast session that the UE has joined or a multicast broadcast session that the UE requests to join.

In an embodiment, the performing the processing operation related to the multicast broadcast session based on the multicast broadcast session information includes:
determining a first network function entity serving a first multicast broadcast session, where the first network function entity includes a session management function (SMF) or a multicast broadcast session management function (MB-SMF);
transmitting a second request to the first network function entity, where the second request carries the multicast broadcast session information; and
receiving a response message to the second request transmitted from the first network function entity.

In an embodiment, the receiving the response message to the second request transmitted from the first network function entity includes:
receiving the response message to the second request that carries a first MBS session ID and resource allocation request information transmitted from the first network function entity;
where the method further includes:
   transmitting a third request to a radio access network function entity based on the response message to the second request, where the third request carries the first MBS session ID and the resource allocation request information, to make the radio access network function entity establish or update a resource for the first multicast broadcast session.

In an embodiment, the response message to the second request carries the first MBS session ID and the following information:
information about indicating the UE to leave the first multicast broadcast session; or,
information about rejecting the UE to join the first multicast broadcast session.

In an embodiment, the method further includes:
transmitting a third request to a radio access network function entity, where the third request carries a first MBS session ID and information about indicating the UE to leave the first multicast broadcast session, to make the radio access network function entity delete an ID of the UE from first multicast broadcast session context.

In an embodiment, the multicast broadcast session information further includes at least one of the following ID information:
an ID of a protocol data unit (PDU) session associated with the first multicast broadcast session; or
an ID of the MB-SMF and/or an ID of the SMF serving the first multicast broadcast session;
where the determining the first network function entity serving the first multicast broadcast session includes:
   determining the first network function entity serving the first multicast broadcast session based on the at least one ID information.

An embodiment of the present application further provides a method for processing a multicast broadcast session, applied to a session management function (SMF), including:
receiving a second request transmitted from a first access and mobility management function (AMF), where the second request carries multicast broadcast session information of a user equipment (UE), the multicast broadcast session information is obtained by the first AMF after the first AMF receives a first request transmitted from the UE, and the first request is a registration request message or a service request message; and
processing a multicast broadcast session of the UE based on the multicast broadcast session information carried by the second request.

In an embodiment, the multicast broadcast session information includes a first multicast broadcast service (MBS) session identifier (ID) and/or indication information, where the indication information is used to indicate that the UE remains joined in, leaves, or requests to join a first multicast broadcast session, and the first multicast broadcast session is a multicast broadcast session that the UE has joined or a multicast broadcast session that the UE requests to join.

In an embodiment, the processing the multicast broadcast session of the UE based on the multicast broadcast session information carried by the second request includes:
in case that the indication information is used to indicate that the UE requests to join the first multicast broadcast session and it is determined to accept the UE to join the first multicast broadcast session, establishing a corresponding relationship between an ID of the UE and the first MBS session ID, and transmitting a response message to the second request to the first AMF, where the response message to the second request carries information about accepting the UE to join the first multicast broadcast session; or,
in case that the indication information is used to indicate that the UE requests to join the first multicast broadcast session and the UE is not within a service area of the first multicast broadcast session, transmitting a response message to the second request to the first AMF, where the response message to the second request carries information about rejecting the UE to join the first multicast broadcast session; or,
in case that the indication information is used to indicate that the UE remains joined in the first multicast broadcast session and the UE is not within a service area of the first multicast broadcast session, transmitting a response message to the second request to the first AMF, where the response message to the second request carries information about indicating the UE to leave the first multicast broadcast session; or,
in case that the indication information is used to indicate that the UE leaves the first multicast broadcast session, deleting a corresponding relationship between an ID of the UE and the first MBS session ID.

In an embodiment, the processing the multicast broadcast session of the UE based on the multicast broadcast session information carried by the second request includes:
in case that the indication information is used to indicate that the UE requests to join the first multicast broadcast session and it is determined to accept the UE to join the first multicast broadcast session, storing an ID of a radio access network function entity serving the UE in first multicast broadcast session context.

An embodiment of the present application further provides a method for processing a multicast broadcast session, applied to a user equipment (UE), including:
transmitting a first request to a first access and mobility management function (AMF), where the first request is a service request message or a registration request message;
receiving a response message to the first request transmitted from the first AMF, where the response message to the first request is a registration accept message or a service accept message, and the response message to the first request includes information about accepting the UE to join or leave a first multicast broadcast session, or information about indicating the UE to leave the first multicast broadcast session, or information about rejecting the UE to join the first multicast broadcast session; and
processing the first multicast broadcast session based on the response message to the first request.

In an embodiment, the first request carries multicast broadcast session information, where the multicast broadcast session information includes a first multicast broadcast service (MBS) session identifier (ID) and indication information, and the first multicast broadcast session is a multicast broadcast session that the UE has joined or a multicast broadcast session that the UE requests to join, and the indication information is used to indicate that the UE remains joined in, leaves, or requests to join the first multicast broadcast session.

In an embodiment, the processing the first multicast broadcast session based on the response message to the first request includes:
in case that the response message to the first request carries information about accepting the UE to join the first multicast broadcast session, storing first multicast broadcast session context; or,
in case that the response message to the first request carries information about rejecting the UE to join the first multicast broadcast session or information about indicating the UE to leave the first multicast broadcast session, deleting first multicast broadcast session context.

In an embodiment, the receiving the response message to the first request transmitted from the first AMF includes:
receiving the response message to the first request transmitted from the first AMF and forwarded by a radio access network function entity;
where the method further includes:
   in case that the response message to the first request carries information about accepting the UE to join the first multicast broadcast session, establishing or updating a resource for the first multicast broadcast session; and
   receiving service data of the first multicast broadcast session by using the resource.

In an embodiment, the receiving the service data of the first multicast broadcast session by using the resource includes:
in case that a radio access network function entity does not support multicast broadcast service, receiving the service data of the first multicast broadcast session in a unicast manner by using the resource; or,
in case that a radio access network function entity supports multicast broadcast service, receiving the service data of the first multicast broadcast session in a multicast broadcast manner by using the resource.

An embodiment of the present application further provides an access and mobility management function (AMF) network function entity, including a memory, a transceiver, and a processor,
where the memory is used for storing a computer program; the transceiver is used for transmitting and receiving data under a control of the processor; and the processor is used for reading the computer program stored in the memory and performing the following operations:
receiving a first request transmitted from a user equipment (UE), where the first request is a registration request message or a service request message;
obtaining multicast broadcast session information of the UE based on the first request; and
performing a processing operation related to a multicast broadcast session based on the multicast broadcast session information.

In an embodiment, the obtaining the multicast broadcast session information of the UE based on the first request includes:
obtaining the multicast broadcast session information of the UE from a second AMF based on the first request, where the second AMF is a network function entity that provides service to the UE before the UE moves.

In an embodiment, the performing the processing operation related to the multicast broadcast session based on the multicast broadcast session information includes:
determining a first network function entity serving a first multicast broadcast session, where the first network function entity includes a session management function (SMF) or a multicast broadcast session management function (MB-SMF);
transmitting a second request to the first network function entity, where the second request carries the multicast broadcast session information; and
receiving a response message to the second request transmitted from the first network function entity.

In an embodiment, the receiving the response message to the second request transmitted from the first network function entity includes:
receiving the response message to the second request that carries a first multicast broadcast service (MBS) session identifier (ID) and resource allocation request information transmitted from the first network function entity;
where the processor is further used for reading the computer program stored in the memory and performing the following operations:
   transmitting a third request to a radio access network function entity based on the response message to the second request, where the third request carries the first MBS session ID and the resource allocation request information, to make the radio access network function entity establish or update a resource for the first multicast broadcast session.

An embodiment of the present application further provides a session management function (SMF) network function entity, including a memory, a transceiver and a processor,
where the memory is used for storing a computer program; the transceiver is used for transmitting and receiving data under a control of the processor; and the processor is used for reading the computer program stored in the memory and performing the following operations:
receiving a second request transmitted from a first access and mobility management function (AMF), where the second request carries multicast broadcast session information of a user equipment (UE), the multicast broadcast session information is obtained by the first AMF after the first AMF receives a first request transmitted from the UE, and the first request is a registration request message or a service request message; and
processing a multicast broadcast session of the UE based on the multicast broadcast session information carried by the second request.

An embodiment of the present application further provides a user equipment (UE), including a memory, a transceiver and a processor,
where the memory is used for storing a computer program; the transceiver is used for transmitting and receiving data under a control of the processor; and the processor is used for reading the computer program stored in the memory and performing the following operations:
transmitting a first request to a first access and mobility management function (AMF), where the first request is a service request message or a registration request message;
receiving a response message to the first request transmitted from the first AMF, where the response message to the first request is a registration accept message or a service accept message, and the response message to the first request includes information about accepting the UE to join or leave a first multicast broadcast session, or information about indicating the UE to leave the first multicast broadcast session, or information about rejecting the UE to join the first multicast broadcast session; and
processing the first multicast broadcast session based on the response message to the first request.

In an embodiment, the first request carries multicast broadcast session information, where the multicast broadcast session information includes a first multicast broadcast service (MBS) session identifier (ID) and indication information, and the first multicast broadcast session is a multicast broadcast session that the UE has joined or a multicast broadcast session that the UE requests to join, and the indication information is used to indicate that the UE remains joined in, leaves, or requests to join the first multicast broadcast session.

In an embodiment, the processing the first multicast broadcast session based on the response message to the first request includes:
in case that the response message to the first request carries information about accepting the UE to join the first multicast broadcast session, storing first multicast broadcast session context; or,
in case that the response message to the first request carries information about rejecting the UE to join the first multicast broadcast session or information about indicating the UE to leave the first multicast broadcast session, deleting first multicast broadcast session context.

In an embodiment, the receiving the response message to the first request transmitted from the first AMF includes:
receiving the response message to the first request transmitted from the first AMF and forwarded by a radio access network function entity;
where the processor is further used for reading the computer program stored in the memory and performing the following operations:
   in case that the response message to the first request carries information about accepting the UE to join the first multicast broadcast session, establishing or updating a resource for the first multicast broadcast session; and
   receiving service data of the first multicast broadcast session by using the resource.

In an embodiment, the receiving the service data of the first multicast broadcast session by using the resource includes:
in case that a radio access network function entity does not support multicast broadcast service, receiving the service data of the first multicast broadcast session in a unicast manner by using the resource; or,
in case that a radio access network function entity supports multicast broadcast service, receiving the service data of the first multicast broadcast session in a multicast broadcast manner by using the resource.

An embodiment of the present application further provides an apparatus for processing a multicast broadcast session, including:
a first receiving unit, used for receiving a first request transmitted from a user equipment (UE), where the first request is a registration request message or a service request message;
a first obtaining unit, used for obtaining multicast broadcast session information of the UE based on the first request; and
a performing unit, used for performing a processing operation related to a multicast broadcast session based on the multicast broadcast session information.

An embodiment of the present application further provides an apparatus for processing a multicast broadcast session, including:
a second receiving unit, used for receiving a second request transmitted from a first access and mobility management function (AMF), where the second request carries multicast broadcast session information of a user equipment (UE), the multicast broadcast session information is obtained by the first AMF after the first AMF receives a first request transmitted from the UE, and the first request is a registration request message or a service request message; and
a first processing unit, used for processing a multicast broadcast session of the UE based on the multicast broadcast session information carried by the second request.

An embodiment of the present application further provides an apparatus for processing a multicast broadcast session, including:
a third transmitting unit, used for transmitting a first request to a first access and mobility management function (AMF), where the first request is a service request message or a registration request message;
a third receiving unit, used for receiving a response message to the first request transmitted from the first AMF, where the response message to the first request is a registration accept message or a service accept message, and the response message to the first request includes information about accepting a user equipment (UE) to join or leave a first multicast broadcast session, or information about indicating the UE to leave the first multicast broadcast session, or information about rejecting the UE to join the first multicast broadcast session; and
a second processing unit, used for processing the first multicast broadcast session based on the response message to the first request.

An embodiment of the present application further provides a processor-readable storage medium, where the processor-readable storage medium stores a computer program, and the computer program, when executed by a processor, causes the processor to perform steps of any one of the above-mentioned methods for processing the multicast broadcast session.

An embodiment of the present application further provides a computer-readable storage medium, where the computer-readable storage medium stores a computer program, and the computer program, when executed by a processor, causes the processor to perform steps of any one of the above-mentioned methods for processing the multicast broadcast session.

In the methods for processing the multicast broadcast session, the network function entities, the apparatuses for processing the multicast broadcast session and the storage mediums provided by the embodiments of the present application, synchronization of multicast broadcast session status between the UE and the network is achieved through the registration request or the service request, which reduces signaling interaction required for the UE to process a multicast broadcast session service, improves signaling efficiency, saves the signaling resource, and shortens the time for the UE to join or leave the multicast broadcast session and receive or transfer the data of the multicast broadcast session.

### BRIEF DESCRIPTION OF THE DRAWINGS

In order to clearly illustrate the solutions in the embodiments of the present application or the related art, the accompanying drawings used in the description of the embodiments or the related art are briefly introduced below. It should be noted that the drawings in the following description are only some embodiments of the present application. For those of ordinary skill in the art, other drawings may be obtained based on these drawings without creative effort.
FIG. 1 is a schematic flowchart of a user equipment (UE) joining a multicast broadcast session according to the related art;
FIG. 2 is a first schematic flowchart of a method for processing a multicast broadcast session according to an embodiment of the present application;
FIG. 3 is a second schematic flowchart of a method for processing a multicast broadcast session according to an embodiment of the present application;
FIG. 4 is a third schematic flowchart of a method for processing a multicast broadcast session according to an embodiment of the present application;
FIG. 5 is a fourth schematic flowchart of a method for processing a multicast broadcast session according to an embodiment of the present application;
FIG. 6 is a fifth schematic flowchart of a method for processing a multicast broadcast session according to an embodiment of the present application;
FIG. 7 is a sixth schematic flowchart of a method for processing a multicast broadcast session according to an embodiment of the present application;
FIG. 8 is a schematic structural diagram of an access and mobility management function (AMF) network function entity according to an embodiment of the present application;
FIG. 9 is a schematic structural diagram of a session management function (SMF) network function entity according to an embodiment of the present application;
FIG. 10 is a schematic structural diagram of a user equipment (UE) according to an embodiment of the present application;
FIG. 11 is a first schematic structural diagram of an apparatus for processing a multicast broadcast session according to an embodiment of the present application;
FIG. 12 is a second schematic structural diagram of an apparatus for processing a multicast broadcast session according to an embodiment of the present application; and
FIG. 13 is a third schematic structural diagram of an apparatus for processing a multicast broadcast session according to an embodiment of the present application.

### DETAILED DESCRIPTION

Modes for transferring a data set used in the Internet Protocol (IP) network include unicast, multicast and broadcast. Multicast broadcast refers to a one-to-many communication mode, that is, same data is transmitted from a transmitting device to multiple receiving devices through technologies such as shared channels and content replication. Compared with unicast, multicast broadcast has higher efficiencies in using network resources.

The 5th generation mobile communication system (5G system, 5GS) is a new generation of radio mobile communication system following the 4th generation mobile communication system (4G system), which provides a greater transmission bandwidth, supports more terminals and more service types. Currently, 5GS supports unicast transmission. In order to support more services, such as IPv4/IPv6 multicast broadcast, interactive Internet TV, or optimization to transmission efficiencies and network resource usage efficiencies of traditional services (such as group communication, Internet of Things (IoT), vehicle to everything (V2X), software download/update, etc.), 5GS will support multicast and broadcast services, that is, 5G multicast broadcast service (5G MBS).

A user equipment (UE) needs to join a multicast broadcast session to receive specific multicast broadcast service data. In the related art, the UE requests to join a specific multicast broadcast session through a protocol data unit (PDU) session modification procedure. A core network (CN) network function entity (such as a session management function (SMF), a multicast broadcast session management function (MB-SMF)) joins the UE into the multicast broadcast session based on the request, and establishes a CN gateway, such as a multicast transmission tunnel between a multicast broadcast user plane function (MB-UPF) and a radio access network (RAN), thereby transmitting data of the multicast broadcast session to the UE.

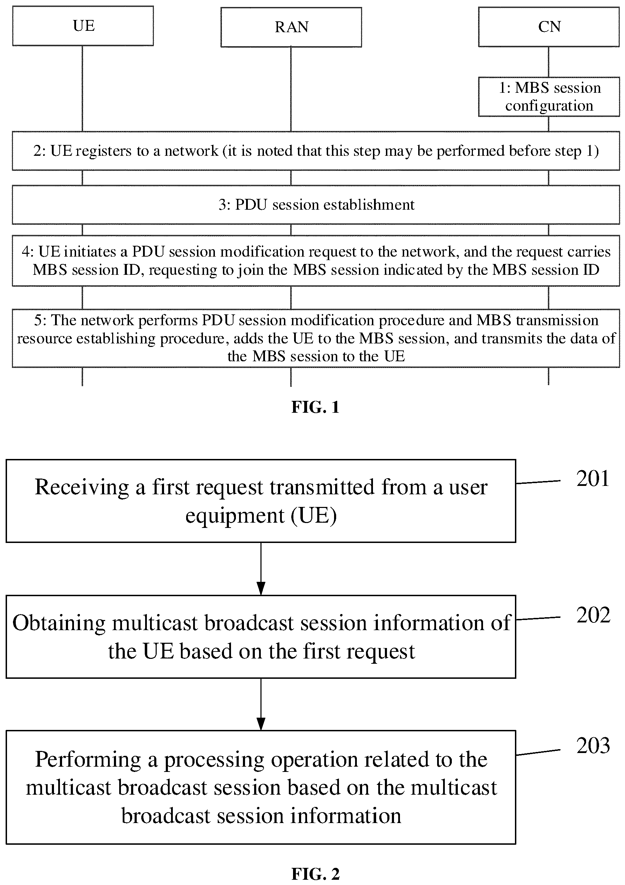

FIG. 1 is a schematic flowchart of a user equipment (UE) joining a multicast broadcast session according to the related art. As shown in FIG. 1, the UE is in an idle state, that is, no signaling connection or data bearer is established between the UE and a radio access network (RAN) node, or the UE is in an inactive state, that is, no signaling connection or data bearer is established between the UE and a core network (CN) node. In case that the UE moves or for other reasons, such as a change in network slice, and the RAN node or even the CN node (such as an access and mobility management function, AMF) serving the UE changes, the following steps may be performed for a reason that no multicast broadcast session information of the UE is in the new RAN node and/or CN node.

In case that the UE wants to continue to receive data of the multicast broadcast session or leave the multicast broadcast session, that is, to stop receiving a paging message and data related to the multicast broadcast session, the UE needs to first enter a connected state through a registration update procedure or a service request procedure, and then initiate a protocol data unit (PDU) session modification procedure to request to join or leave a multicast broadcast session that the UE has joined.

In case that the above steps are not performed, when the network needs to transmit the data of the multicast broadcast session to the UE, the network needs to page the UE because the UE is in the idle state or the inactive state. The UE responds to the paging through the service request procedure or the registration update procedure, and then the UE initiates the PDU session modification procedure to request to join or leave the multicast broadcast session that the UE has joined, or the CN directly initiates a multicast broadcast session creating procedure to the UE, and then the UE accepts or rejects it.

When a network node that the UE accesses changes, the UE in the idle (IDLE) state or the inactive state needs to perform a lot of signaling interactions with the network. The UE must first finish the registration update procedure or the service request procedure, and then initiate the PDU session modification procedure. Only after the above steps are finished, the UE may receive the multicast broadcast session, which includes data of the multicast broadcast session that the UE has joined, or leaving the multicast broadcast session, that is, stop receiving the paging message and the data related to the multicast broadcast session.

Due to the above problems in the related art, embodiments of the present application provide methods for processing a multicast broadcast session, network function entities, apparatuses for processing a multicast broadcast session, and a storage medium.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative work belong to the scope of the present application.

FIG. 2 is a first schematic flowchart of a method for processing a multicast broadcast session according to an embodiment of the present application. As shown in FIG. 2, an embodiment of the present application provides a method for processing a multicast broadcast session, the execution subject of the method is a first access and mobility management function (AMF). The method includes the following steps.

Step 201: receiving a first request transmitted from a user equipment (UE), where the first request is a registration request message or a service request message.

In an embodiment, the first AMF receives the registration request message or the service request message transmitted from the UE.

In case of a certain condition, such as moving to a new registration area, requesting to update UE capability or requesting network information, the UE transmits the registration request message to a network to request registration update, or transmits the service request message to request service update.

In case that the UE in an IDLE state or a CONNECTED state moves to the registration area through mobility registration; or, in case that the UE registers to the 5G system initially; or, in case that the UE initiates periodic registration; or, in case that the UE needs to update a capability and a protocol parameter negotiated through the registration procedure, the registration request procedure is initiated.

The UE in the IDLE state initiates a service request process mainly for transmitting an uplink signaling message and user data, or responding to a paging request from the network. After the AMF receives the service request message, the AMF may perform identity authentication. After establishing a signaling connection with the AMF, the UE or the network may transmit the signaling message, such as a protocol data unit (PDU) session establishing request from the UE to a session management function (SMF) via the AMF.

In an embodiment, during the movement of the UE, the AMF serving the UE may change. In case that the AMF serving the UE changes, the first AMF here may be a network function entity that provides service to the UE after the UE moves.

Step 202: obtaining multicast broadcast session information of the UE based on the first request.

In an embodiment, the multicast broadcast session information of the UE is obtained based on the first request.

In a first case, when the UE transmits the first request and the first request carries the multicast broadcast session information of the UE, the first AMF may directly obtain the multicast broadcast session information of the UE from the first request.

In a second case, due to the movement of the UE, the AMF serving the UE changes, and the UE transmits the first request to the first AMF. The first request may be a registration request which is used to request to update the UE capability or request for network information. The first AMF may determine, based on the first request, a second AMF that provided service for the UE before the UE moves to the first AMF, and obtain UE context from the second AMF. The second AMF may include the multicast broadcast session information of the UE in the UE context in the response to the first AMF.

In an embodiment, the first AMF transmits a UE context request to other network function entities that provide service for the UE, thereby obtaining the multicast broadcast session information of the UE. The network function entities that provide service for the UE may be the AMF that served the UE before the UE moves, that is, the second AMF, or it may be a unified data management function (UDM) which provides the UE context to the first AMF context and the UE context carries the multicast broadcast session information (that is, a multicast broadcast session message) of the multicast broadcast session that the UE has joined.

In a third case, when the UE transmits the first request, the first request carries the multicast broadcast session information. Due to the movement of the UE, the AMF serving the UE changes, the first AMF requests the UE context from the second AMF or the UDM, and the UE context returned by the second AMF or UDM carries the multicast broadcast session information of the multicast broadcast session that the UE has joined. In case that the UE does not request to join a new multicast broadcast session, the multicast broadcast session information in the UE context and the multicast broadcast session information carried in the first request may be the same. Therefore, the first AMF may obtain the multicast broadcast session information of the UE from the first request, or the first AMF may obtain the multicast broadcast session information of the UE from a UE context response message of the second AMF or the UDM.

In case that the UE requests to join a new multicast broadcast session, the multicast broadcast session information carried in the UE context is the multicast broadcast session information of the multicast broadcast session that the UE has joined, and the first request carries the multicast broadcast session information of the multicast broadcast session that the UE requests to join. The first AMF determines complete multicast broadcast session information of the UE based on the first request and the UE context.

Step 203: performing a processing operation related to the multicast broadcast session based on the multicast broadcast session information.

In an embodiment, the operation related to the multicast broadcast session is performed based on the multicast broadcast session information.

After the first AMF obtains the multicast broadcast session information of the UE, the registration request procedure or the service request procedure continues, and meanwhile processing for a multicast broadcast session service continues. Processing related to the multicast broadcast session includes receiving/transferring data of the multicast broadcast session, indicating the UE to leave/join the multicast broadcast session, etc.

In an embodiment, after the first AMF receives the first request transmitted from the UE, a response message to the first request is transmitted to the UE. The response message to the first request is a registration accept message or a service accept message.

In case that the UE requests to remain joined in a first multicast broadcast session, and the response message to the first request includes information about accepting the UE to remain joined in the first multicast broadcast session, the UE updates first multicast broadcast session context based on the response message to the first request.

In case that the UE requests to remain joined in the first multicast broadcast session, and the response message to the first request includes information about indicating the UE to leave the first multicast broadcast session, the UE deletes the first multicast broadcast session context based on the response message to the first request.

In case that the UE requests to leave the first multicast broadcast session, and the response message to the first request includes information about indicating the UE to leave the first multicast broadcast session, the UE deletes the first multicast broadcast session context based on the response message to the first request.

In case that the UE requests to join the first multicast broadcast session, and the response message to the first request includes information about accepting the UE to join the first multicast broadcast session, the UE creates the first multicast broadcast session context based on the response message to the first request.

In case that the UE requests to join the first multicast broadcast session, and the response message to the first request includes information about rejecting the UE to join the first multicast broadcast session, the UE determines not to join the first multicast broadcast session based on the response message to the first request.

In the method for processing the multicast broadcast session provided by the embodiment of the present application, synchronization of multicast broadcast session status between the UE and the network is achieved through the registration request or the service request, which reduces signaling interaction required for the UE to process multicast broadcast session service, improves signaling efficiency, saves the signaling resource, and shortens the time for the UE to join or leave the multicast broadcast session and receive or transfer the data of the multicast broadcast session.

In an embodiment, in case that the first request carries the multicast broadcast session information of the UE, the obtaining the multicast broadcast session information of the UE based on the first request includes:
obtaining the multicast broadcast session information of the UE from the first request.

In an embodiment, the multicast broadcast session information of the UE carried in the first request includes at least one of the following:
(1) one or more multicast broadcast service session identifiers (MBS session IDs), which may be an MBS session ID of the multicast broadcast session that the UE requests to join, or an MBS session ID of the multicast broadcast session that the UE has joined;
(2) information of a network function (NF) serving the multicast broadcast session, such as a multicast broadcast session management function (MB-SMF) ID;
(3) an ID of a PDU session associated with the multicast broadcast session;
(4) for the multicast broadcast session that the UE has joined, a multicast broadcast session status indicating whether the UE remains in the joined status, where 1 indicates that the UE still joins the session, and 0 indicates that the UE leaves the session; or
(5) for a new multicast broadcast session that the UE requests to join, a join request indication and a data network name (DNN) corresponding to the multicast broadcast session and/or single network slice selection assistance information (S-NSSAI).

For example, it is assumed that the multicast broadcast session information carried in the first request includes MBS session ID1. A multicast broadcast session corresponding to MBS session ID1 is the multicast broadcast session that the UE remains joined in. Correspondingly, the first request may further carry a multicast session status indication. The multicast session status indication may be 1, which indicates that the UE remains joined the MBS session corresponding to MBS session ID1; or the multicast broadcast session status indication may be 0, which indicates that the UE leaves the MBS session corresponding to MBS session ID1.

For another example, it is assumed that the multicast broadcast session information carried in the first request further includes MBS session ID2. A multicast broadcast session corresponding to MBS session ID2 is the multicast broadcast session that the UE requests to join. Correspondingly, the first request may further carry a DNN and S-NSSAI corresponding to the multicast broadcast session, and then a network side may determine whether the UE is allowed to join the session corresponding to MBS session ID2 based on the DNN and the S-NSSAI.

In an embodiment, obtaining the multicast broadcast session information of the UE based on the first request includes:
obtaining the multicast broadcast session information of the UE from a second AMF based on the first request, where the second AMF is an AMF that provides service to the UE before the UE moves, and the first AMF is an AMF that provides service to the UE after the UE moves.

In an embodiment, after receiving the registration request message or the service request message of the UE, the first AMF determines the second AMF that provided the service to the UE before the UE moves based on the UE ID, and transmits a UE context transfer request to the second AMF.

The second AMF transmits a response message to the UE context transfer request to the first AMF. The response message carries the UE context, to make the first AMF obtain the multicast broadcast session information of the UE. The UE context includes at least one of the following information:
(1) one or more MBS session IDs;
(2) information of an NF serving the multicast broadcast session, such as an MB-SMF ID; or
(3) information of the PDU session currently established by the UE, where the PDU session information includes a PDU session ID and information of an SMF serving the PDU session, and for the PDU session associated with multicast broadcast session, the PDU session information further includes the MBS session ID.

In an embodiment, the multicast broadcast session information includes a first MBS session ID and/or indication information, where the indication information is used to indicate that the UE remains joined in, leaves, or requests to join a first multicast broadcast session, and the first multicast broadcast session is a multicast broadcast session that the UE has joined or a multicast broadcast session that the UE requests to join.

In an embodiment, the multicast broadcast session information of the UE includes the first MBS session ID and/or indication information. The multicast broadcast session information of the UE includes one or more first MBS session IDs.

When the UE does not request to join a new multicast broadcast session, the first multicast broadcast session is the multicast broadcast session that the UE has joined. When the UE requests to join a new multicast broadcast session, the first multicast broadcast session may be the multicast broadcast session that the UE requests to join, or the multicast broadcast session that the UE has joined.

When the UE requests to join a new multicast broadcast session and requests to remain joined in or leave the multicast broadcast session that the UE has joined, the multicast broadcast session information of the UE includes the MBS session ID, and further includes indication information. The indication information is used to indicate that the UE requests to join a new multicast broadcast session, or to indicate that the UE remains joined in the multicast broadcast session that the UE has joined, or to indicate that the UE leaves the multicast broadcast session that the UE has joined.

For the multicast broadcast session that the UE has joined, when the UE requests to remain joined in the multicast broadcast session and the UE is in a service area of the multicast broadcast session, the multicast broadcast session information of the UE may not include the indication information about indicating the UE to remain joined in the multicast broadcast session, and the multicast broadcast session may not be processed.

In an embodiment, performing the processing operation related to the multicast broadcast session based on the multicast broadcast session information includes:
determining a first network function entity serving the first multicast broadcast session, where the first network function entity includes a session management function (SMF) or a multicast broadcast session management function (MB-SMF);
transmitting a second request to the first network function entity, where the second request carries the multicast broadcast session information; and
receiving a response message to the second request transmitted from the first network function entity.

In an embodiment, the first AMF determines the SMF or the MB-SMF serving the first multicast broadcast session, transmits the second request to the SMF or the MB-SMF, (the second request carries the multicast broadcast session information of the UE), and receives a response message from the SMF or the MB-SMF.

The second request is used for requesting to update the multicast broadcast session information.

The first AMF determines the PDU session associated with the first multicast broadcast session and the SMF serving the PDU session based on the multicast broadcast session information and/or the UE context.

The first AMF transmits a PDU session update management context request to the SMF. The PDU session update management context request carries multicast broadcast session information, and may further carry UE location information, such as an ID of the cell where the UE is located or a tracking area identifier (TAI) where the UE is located.

The SMF requests to update the multicast broadcast session information to the MB-SMF. The request message may carry an AMF ID and an RAN node ID. The MB-SMF updates the AMF ID and the RAN node ID into the multicast broadcast session context. The MB-SMF transmits a response message indicating an update of the multicast broadcast session information to the SMF. The response message includes the MBS Session ID and at least one of the following information:
quality of service (QoS) information, down link tunnel ID, multicast address, etc.

The SMF updates the multicast broadcast session information and the PDU session information associated with the multicast broadcast session based on the response from the MB-SMF. For example, in case that a QoS rule and/or a QoS parameter of a multicast QoS flow changes, the SMF updates a QoS rule and/or a QoS parameter of a mapped unicast QoS flow accordingly.

The SMF transmits a PDU session update management context request response message to the first AMF.

For the ID of the MB-SMF determined based on the UE context that serves the multicast broadcast session, the first AMF transmits a multicast broadcast session update request to the MB-SMF indicated by the MB-SMF ID. The request message carries the MBS Session ID and the RAN node ID, and it may further include RAN tunnel information.

The MB-SMF configures a multicast broadcast user plane function (MB-UPF) based on the received multicast broadcast session information update request, and updates the AMF ID and RAN node ID into the multicast broadcast session context. The MB-SMF transmits a multicast broadcast session request response message to the first AMF.

In an embodiment, receiving the response message to the second request transmitted from the first network function entity includes:
receiving the response message to the second request that carries the first MBS session ID and resource allocation request information transmitted from the first network function entity;
where the method further includes:
   transmitting a third request to a radio access network function entity based on the response message to the second request, where the third request carries the first MBS session ID and the resource allocation request information, to make the radio access network function entity establish or update a resource for the first multicast broadcast session.

In an embodiment, the first AMF receives the response message to the second request transmitted from the first network function entity, and the response message to the second request carries the first MBS session ID and resource allocation request information. Based on the response message to the second request, a third request is transmitted to the RAN for establishing or updating the resource for the first multicast broadcast session.

When the first network function entity is the SMF, the SMF transmits a PDU session update session management context response message to the first AMF. The response message carries the MBS Session ID and the MB-SMF ID. N2 information to the RAN carries the multicast session information, including the MBS Session ID, associated PDU session information and at least one of the following information: QoS information, common downlink tunnel ID, multicast address, etc.

For a multicast service provided in a specific area, the SMF may determine whether the UE is currently in a service area of the first multicast broadcast session based on the UE location information and the service area of the first multicast broadcast session.

In case that the UE is not within the service area of the first multicast broadcast session, the SMF requires the UE to leave the first multicast broadcast session, that is, the response message transmitted to the first AMF carries a PDU session modification indication message, and the indication message carries the first MBS session ID and information about indicating the UE to leave the first multicast broadcast session.

In case that the first multicast broadcast session indicates the UE to leave:
the SMF updates the information of the PDU session associated with the first multicast broadcast session, that is, deletes the MBS Session ID and mapped unicast QoS information from the PDU session context; and in case that the SMF has stored a UE list of UEs that join the first multicast broadcast session, the SMF deletes the UE ID from the UE list; and
the response message from the SMF to the first AMF does not carry the MB-SMF ID, and the N2 information from the SMF to the RAN does not carry the information of the first multicast broadcast session.

In case that the first network function entity is the MB-SMF, the MB-SMF configures MB-UPF based on the received multicast broadcast session information update request, and updates the AMF ID and RAN node ID into the multicast broadcast session context.

The MB-SMF transmits a multicast broadcast session information update request response message to the AMF. The response message carries the multicast broadcast session information provided for the RAN, including the MBS Session ID and at least one of the following:
QoS information, common downlink tunnel ID, multicast address, etc.

The first AMF transmits the above-mentioned multicast broadcast session information provided for the RAN to the RAN through an N2 interface. The RAN transmits a resource allocation request message to the UE. If the resource for the first multicast broadcast session has not been established, the resource for the first multicast broadcast session is established. If the resource for the first multicast broadcast session has been established, the resource for the first multicast broadcast session is updated.

In case that the RAN supports the multicast broadcast service, the UE receives data of the first multicast broadcast session in a multicast broadcast manner using the resource for the first multicast broadcast session.

In case that the RAN does not support the multicast broadcast service, the UE receives data of the first multicast broadcast session in a unicast manner using the resource for the first multicast broadcast session.

In an embodiment, the response message to the second request carries the first MBS session ID and the following information:
information about indicating the UE to leave the first multicast broadcast session; or,
information about rejecting the UE to join the first multicast broadcast session.

In an embodiment, the response message to the second request transmitted from the first network function entity to the first AMF carries the first MBS session ID and information about indicating the UE to leave or rejecting the UE to join the first multicast broadcast session.

When the first multicast broadcast session is a multicast broadcast session that the UE has joined, the multicast broadcast session information carries information about indicating the UE to remain joined in or leave the first multicast broadcast session.

When the first multicast broadcast session is a new multicast broadcast session that the UE requests to join, the multicast broadcast session information carries information of indicating that the UE requests to join the first multicast broadcast session.

For a multicast service provided in a specific area, the SMF may determine whether the UE is currently in a multicast broadcast session service area (MBS service area) based on the UE location information and the MBS service area.

For the first multicast broadcast session that the UE requests to remain joined in, in case that the UE is not within the service area of the first multicast broadcast session, the SMF determines that the UE cannot remain joined in the first multicast broadcast session, the response message to the second request carries information about indicating the UE to leave the first multicast broadcast session, such as the first MBS session ID and a leave indication.

The SMF updates the PDU session information associated with the first multicast broadcast session, that is, the first MBS session ID and the mapped unicast QoS information are deleted from the PDU session context. In case that SMF has stored the UE list of UEs that join the first multicast broadcast session, the SMF deletes the UE ID from the UE list.

In case that the UE is within the service area of the first multicast broadcast session and the SMF determines to accept that the UE remains jointed in the first multicast broadcast session, the first AMF may add information of new RAN node serving the UE to the multicast broadcast session context, such as the RAN node ID.

For the first multicast broadcast session requested by the UE to join, in case that the UE is not within the service area of the first multicast broadcast session, the SMF rejects the UE to join the first multicast broadcast session, and carries the first MBS session ID and indication information about rejecting the UE to join the first multicast broadcast session in the response message to the second request to the first AMF.

In case that the UE is within the service area of the first multicast broadcast session and the SMF determines to accept the UE to join the first multicast broadcast session, the SMF adds the UE ID to the UE list of the first multicast broadcast session. The response message to the second request carries information about accepting the UE to join the first multicast broadcast session.

In an embodiment, the method further includes:
transmitting a third request to the radio access network function entity, where the third request carries a first MBS session ID and information about indicating the UE to leave the first multicast broadcast session, to make the radio access network function entity delete an ID of the UE from first multicast broadcast session context.

In an embodiment, after receiving the response message to the second request transmitted from the SMF or the MB-SMF, the first AMF transmits the third request to the RAN through the N2 interface. The third request carries multicast broadcast session information and a registration/service accept message, and further carries the PDU session modification indication message.

The PDU session modification indication message carries the first MBS session ID and information about indicating the UE to leave the first multicast broadcast session.

In case that the multicast broadcast session indicates the UE to leave, the SMF updates the information of the PDU session associated with the multicast broadcast session, that is, the first MBS session ID and the mapped unicast QoS information are deleted from the PDU session context. In case that the SMF has stored the UE list of UEs that join the first multicast broadcast session, the SMF deletes the UE ID from the UE list.

The response message transmitted from the SMF to the first AMF carries information about indicating the UE to leave the first multicast broadcast session, such as the first MBS session ID and the leave indication.

The first AMF transmits the third request to the RAN, the RAN forwards the information in the third request to the UE, and the UE determines to leave the first multicast broadcast session based on the first MBS session ID and the information about indicating the UE to leave the first multicast broadcast session, that is: the context of the multicast broadcast session in the UE is deleted.

In an embodiment, the multicast broadcast session information further includes at least one of the following ID information:
an ID of a PDU session associated with the first multicast broadcast session; or
an ID of the MB-SMF and/or an ID of the SMF serving the first multicast broadcast session;
where determining the first network function entity serving the first multicast broadcast session includes:
   determining the first network function entity serving the first multicast broadcast session based on the at least one ID information.

In an embodiment of the present application, in addition to the first MBS session ID and/or the indication information, the multicast broadcast session information further includes:
an ID of the PDU session associated with the first multicast broadcast session; and
information of the network function serving the first multicast broadcast session, such as the MB-SMF ID and/or the SMF ID.

The first AMF determines the PDU session associated with the first multicast broadcast session and the SMF serving the PDU session based on the multicast broadcast session information in the first request transmitted from the UE and/or the multicast broadcast session information in the UE context,
which includes:
in case that the first request transmitted from the UE includes the ID of the PDU session associated with the first multicast broadcast session, the PDU session indicated by the ID of the PDU session and the SMF serving the PDU session are selected;
in case that some PDU session information in the UE context includes multicast broadcast session information, the PDU session and the SMF serving the PDU session are selected; and
in case that all PDU session information in the UE context does not include multicast broadcast session information, based on the DNN and/or the S-NSSAI corresponding to the multicast broadcast session in a UE registration request, a PDU session corresponding to the DNN and/or the S-NSSAI is selected as a PDU session associated with the multicast broadcast session, and the SMF serving the PDU session is also selected.

In case that the UE context includes the ID of the MB-SMF serving the first multicast broadcast session, the first AMF may determine the MB-SMF serving the first multicast broadcast session based on the ID of the MB-SMF.

In the method for processing the multicast broadcast session provided by the embodiment of the present application, synchronization of multicast broadcast session status between the UE and the network is achieved through the registration request or the service request, which reduces signaling interaction required for the UE to process a multicast broadcast session service, improves signaling efficiency, saves the signaling resource, and shortens the time for the UE to join or leave the multicast broadcast session and receive or transfer the data of the multicast broadcast session.

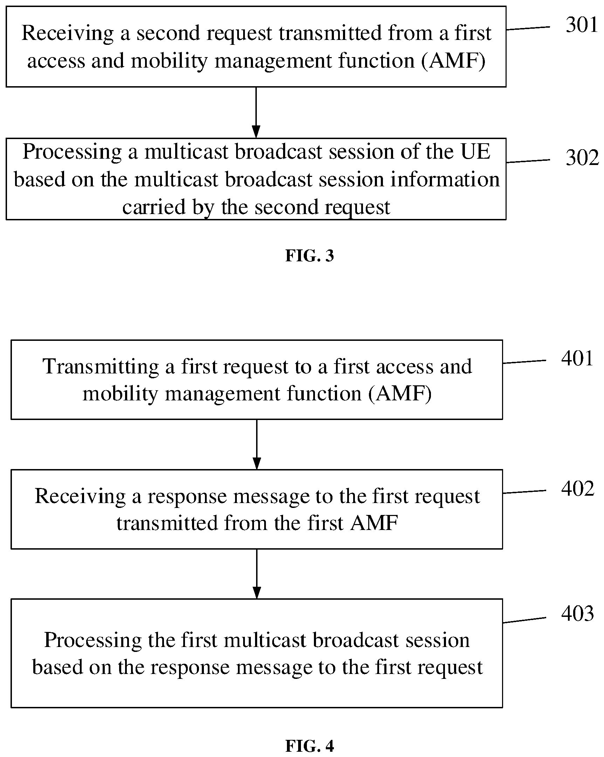

FIG. 3 is a second schematic flowchart of a method for processing a multicast broadcast session according to an embodiment of the present application. As shown in FIG. 3, an embodiment of the present application provides a method for processing a multicast broadcast session, the execution subject of the method is a session management function (SMF). The method includes the following steps.

Step 301: receiving a second request transmitted from a first access and mobility management function (AMF), where the second request carries multicast broadcast session information of a user equipment (UE), the multicast broadcast session information is obtained by the first AMF after the first AMF receives a first request transmitted from the UE, and the first request is a registration request message or a service request message.

Step 302: processing a multicast broadcast session of the UE based on the multicast broadcast session information carried by the second request.

In the method for processing the multicast broadcast session provided by the embodiment of the present application, synchronization of multicast session status between the UE and the network is achieved through the registration request or the service request, which reduces signaling interaction required for the UE to process a multicast broadcast session service, improves signaling efficiency, saves the signaling resource, and shortens the time for the UE to join or leave the multicast broadcast session and receive or transfer the data of the multicast broadcast session.

In an embodiment, the multicast broadcast session information includes a first multicast broadcast service (MBS) session identifier (ID) and/or indication information, where the indication information is used to indicate that the UE remains joined in, leaves, or requests to join a first multicast broadcast session, and the first multicast broadcast session is a multicast broadcast session that the UE has joined or a multicast broadcast session that the UE requests to join.

In an embodiment, the processing the multicast broadcast session of the UE based on the multicast broadcast session information carried by the second request includes:
in case that the indication information is used to indicate that the UE requests to join the first multicast broadcast session and it is determined to accept the UE to join the first multicast broadcast session, establishing a corresponding relationship between an ID of the UE and the first MBS session ID, and transmitting a response message to the second request to the first AMF, where the response message to the second request carries information about accepting the UE to join the first multicast broadcast session; or,
in case that the indication information is used to indicate that the UE requests to join the first multicast broadcast session and the UE is not within service area of the first multicast broadcast session, transmitting a response message to the second request to the first AMF, where the response message to the second request carries information about rejecting the UE to join the first multicast broadcast session; or,
in case that the indication information is used to indicate that the UE remains joined in the first multicast broadcast session and the UE is not within a service area of the first multicast broadcast session, transmitting a response message to the second request to the first AMF, where the response message to the second request carries information about indicating the UE to leave the first multicast broadcast session; or,
in case that the indication information is used to indicate that the UE leaves the first multicast broadcast session, deleting a corresponding relationship between an ID of the UE and the first MBS session ID.

In an embodiment, the processing the multicast broadcast session of the UE based on the multicast broadcast session information carried by the second request includes:
in case that the indication information is used to indicate that the UE requests to join the first multicast broadcast session and it is determined to accept the UE to join the first multicast broadcast session, storing an ID of a radio access network function entity serving the UE in first multicast broadcast session context.

It should be noted here that the above-mentioned method for processing the multicast broadcast session having the SMF as the execution subject provided by the embodiment of the present application may implement all the corresponding method steps implemented by the above-mentioned method for processing the multicast broadcast session having the first AMF as the execution subject, and may achieve the same effect, the parts and beneficial effects that are the same as those in the method embodiment are not described in detail here.

FIG. 4 is a third schematic flowchart of a method for processing a multicast broadcast session according to an embodiment of the present application. As shown in FIG. 4, an embodiment of the present application provides a method for processing a multicast broadcast session, the execution subject of which is a user equipment (UE). The method includes the following steps.

Step 401: transmitting a first request to a first access and mobility management function (AMF), where the first request is a service request message or a registration request message.

Step 402: receiving a response message to the first request transmitted from the first AMF, where the response message to the first request is a registration accept message or a service accept message, and the response message to the first request includes information about accepting the UE to join or leave a first multicast broadcast session, or information about indicating the UE to leave the first multicast broadcast session, or information about rejecting the UE to join the first multicast broadcast session.

Step 403: processing the first multicast broadcast session based on the response message to the first request.

In the method for processing the multicast broadcast session provided by the embodiment of the present application, synchronization of multicast session status between the UE and the network is achieved through the registration request or the service request, which reduces signaling interaction required for the UE to process a multicast broadcast session service, improves signaling efficiency, saves the signaling resource, and shortens the time for the UE to join or leave the multicast broadcast session and receive or transfer the data of the multicast broadcast session.

In an embodiment, the first request carries multicast broadcast session information, where the multicast broadcast session information includes a first multicast broadcast service (MBS) session identifier (ID) and indication information, and the first multicast broadcast session is a multicast broadcast session that the UE has joined or a multicast broadcast session that the UE requests to join, and the indication information is used to indicate that the UE remains joined in, leaves, or requests to join the first multicast broadcast session.

In an embodiment, the processing the first multicast broadcast session based on the response message to the first request includes:
in case that the response message to the first request carries information about accepting the UE to join the first multicast broadcast session, storing first multicast broadcast session context; or,
in case that the response message to the first request carries information about rejecting the UE to join the first multicast broadcast session or information about indicating the UE to leave the first multicast broadcast session, deleting first multicast broadcast session context.

In an embodiment, the receiving the response message to the first request transmitted from the first AMF includes:
receiving the response message to the first request transmitted from the first AMF and forwarded by a radio access network function entity;
where the method further includes:
   in case that the response message to the first request carries information about accepting the UE to join the first multicast broadcast session, establishing or updating a resource for the first multicast broadcast session; and
   receiving service data of the first multicast broadcast session by using the resource.

In an embodiment, the receiving the service data of the first multicast broadcast session by using the resource includes:
in case that a radio access network function entity does not support multicast broadcast service, receiving the service data of the first multicast broadcast session in a unicast manner by using the resource; or,
in case that a radio access network function entity supports multicast broadcast service, receiving the service data of the first multicast broadcast session in a multicast broadcast manner by using the resource.

It should be noted here that the above-mentioned method for processing the multicast broadcast session having the UE as the execution subject provided by the embodiment of the present application may implement all the corresponding method steps implemented by the above-mentioned method for processing the multicast broadcast session having the first AMF as the execution subject, and may achieve the same effect, the parts and beneficial effects that are the same as those in the method embodiment are not described in detail here.

The method for processing the multicast broadcast session provided by the present application will be described below with specific embodiments.

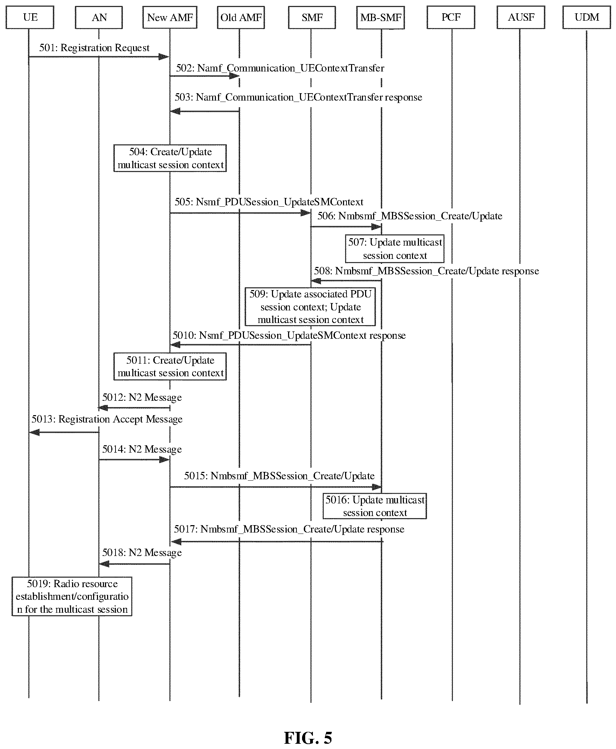

FIG. 5 is a fourth schematic flowchart of a method for processing a multicast broadcast session according to an embodiment of the present application. As shown in FIG. 5, an embodiment of the present application provides a method for processing a multicast broadcast session. During a registration procedure, in case that an access and mobility management function (AMF) triggers to establish a multicast broadcast session at a new radio access network (RAN) node, the method includes the following steps.

Step 501: when the UE moves to a new registration area, requests to update UE capability, or requests network information, etc., the UE transmits a registration request to the network to request registration update.

Step 502: in case that the network function entity serving the UE changes after the UE moves, a new AMF serving the UE after the UE moves determines whether the new AMF has UE context, the new AMF determines an old AMF serving the UE before the UE moves based on the UE ID, and transmits a UE context transfer request (Namf_Communication_UEContextTransfer) to the old AMF.

Step 503: the old AMF transmits a response message to the UE context transfer request (Namf_Communication_UEContextTransfer Response) to the new AMF. The response message carries the multicast broadcast session information of the multicast broadcast session that the UE has joined, including at least one of the following:
one or more multicast broadcast service session identifiers (MBS session IDs);
information of a network function (NF) serving the multicast broadcast session, such as a multicast broadcast session management function (MB-SMF) ID; or
an ID of a protocol data unit (PDU) session associated with the multicast broadcast session (associated PDU Session ID).

Step 504: the new AMF creates or updates the multicast broadcast session context based on the multicast broadcast session information provided by the old AMF. The new AMF may add information of the new RAN node serving the UE, such as RAN Node ID, to the multicast broadcast session context.

Step 505: the new AMF determines the PDU session associated with the multicast broadcast session and the SMF serving the PDU session based on the information of the PDU session in the UE context.

The new AMF transmits a PDU session update session management context request (Nsmf_PDUSession_Update Session Management Context) to the SMF. The request message carries the multicast broadcast session information, such as the MBS Session ID. The request message may further carry UE location information, such as the ID of the cell where the UE is located or a tracking area identifier (TAI).

Step 506: the SMF requests the MB-SMF to update the multicast broadcast session information. The request message may carry the AMF ID and the RAN node ID.

Step 507: the MB-SMF updates the AMF ID and the RAN node ID into the multicast broadcast session context.

Step 508: the MB-SMF transmits a response message indicating the update of the multicast broadcast session information to the SMF. The response message includes the MBS Session ID and at least one of the following information:
quality of service (QoS) information, down link tunnel ID, multicast address, etc.

Step 509: the SMF updates local multicast broadcast session information based on a response of the MB-SMF, and updates the information of the PDU session associated with the multicast broadcast session. For example, in case that a QoS rule and/or a QoS parameter of a multicast QoS flow changes, the SMF updates a QoS rule and/or a QoS parameter of a mapped unicast QoS flow accordingly.

Step 5010: the SMF transmits a PDU session update session management context response message (Nsmf_PDUSession_Update Session Management Context response) to the new AMF. The response message carries the MBS Session ID and the MB-SMF ID. N2 information for the RAN includes the multicast session information, including the MBS Session ID, associated PDU session information and at least one of the following information:
QoS information, common downlink tunnel ID, multicast address, etc.

For a multicast service only provided in a specific area, the SMF may determine whether the UE is currently in a multicast broadcast session service area (MBS service area) based on the UE location information and the MBS service area.

In case that the UE is not within the service area of the multicast broadcast session, the SMF requires the UE to leave the multicast broadcast session, that is, the response message for the new AMF carries a PDU session modification indication (PDU Session Modification Command) message, which carries multiple MBS session IDs and information about indicating the UE to leave the multicast broadcast session.

In case that multicast broadcast session indicates the UE to leave:
the SMF updates the information of the PDU session associated with the multicast broadcast session, that is, the MBS Session ID and a mapped unicast QoS information are deleted from the PDU session context; and in case that SMF has stored a UE list of UEs that join the multicast broadcast session, the SMF deletes the UE ID from the UE list; and
a response message from the SMF to the new AMF does not carry the MB-SMF ID, and the N2 information from the SMF to the RAN does not carry the multicast broadcast session information.

Steps 506-509, 5011, and 5014-5019 are not performed.

Step 5011: in case that step 504 is not performed, the new AMF may create or update the multicast broadcast session context. The new AMF may further add information of the new RAN node serving the UE, such as RAN node ID, to the multicast broadcast session context.

Step 5012: the new AMF transmits an N2 message to the RAN. The N2 message carries the multicast broadcast session information included in the Nsmf_PDUSession_Update Session Management Context response in step 5010 and a registration accept message. The N2 message may further carry PDU Session Modification Command message.

Step 5013: the RAN forwards the registration accept message to the UE. The RAN may further forward the PDU Session Modification Command message to the UE, and the UE determines to leave the multicast broadcast session based on the MBS Session ID in the message and the information about indicating the UE to leave the multicast broadcast session, that is, the context of the multicast broadcast session in the UE is deleted. For other multicast broadcast session, the UE retains or updates the context of the multicast broadcast session in the UE.

Step 5014: in case that the RAN supports multicast service, the RAN transmits the N2 message to the AMF based on the received multicast broadcast session information. The N2 message carries the MBS Session ID and may further carry RAN tunnel information.

Step 5015: the AMF transmits a multicast broadcast session information update request to the MB-SMF indicated by the MB-SMF ID in step 503 or step 5010. The request message carries the MBS Session ID and the RAN Node ID, and may further carry the RAN tunnel information.

Step 5016: the MB-SMF configures MB-UPF based on the received multicast broadcast session information update request, and updates the AMF ID and RAN node ID into the multicast broadcast session context.

Step 5017: the MB-SMF transmits a multicast broadcast session information update request response message to the AMF. The response message carries the multicast broadcast session information provided for the RAN, including the MBS Session ID and at least one of the following:
QoS information, common downlink tunnel ID, multicast address, etc.

The QoS information, the common downlink tunnel ID and the multicast address may be transmitted to the RAN through steps 5010 and 5012 or steps 5017 and 5018.

Step 5018: the AMF transmits the N2 message to an NG-RAN node. The N2 message carries the multicast broadcast session information provided by the MB-SMF in step 5017.

Step 5019: the RAN transmits a resource allocation request message to the UE, and establishes a resource for the multicast broadcast session in case that the resource for the multicast broadcast session have not been established. In case that the RAN does not support multicast service, the RAN establishes a resource of a unicast QoS flow mapping with a multicast QoS flow for the PDU session associated with the multicast broadcast session, and transmits multicast service data to the UE in a unicast manner.

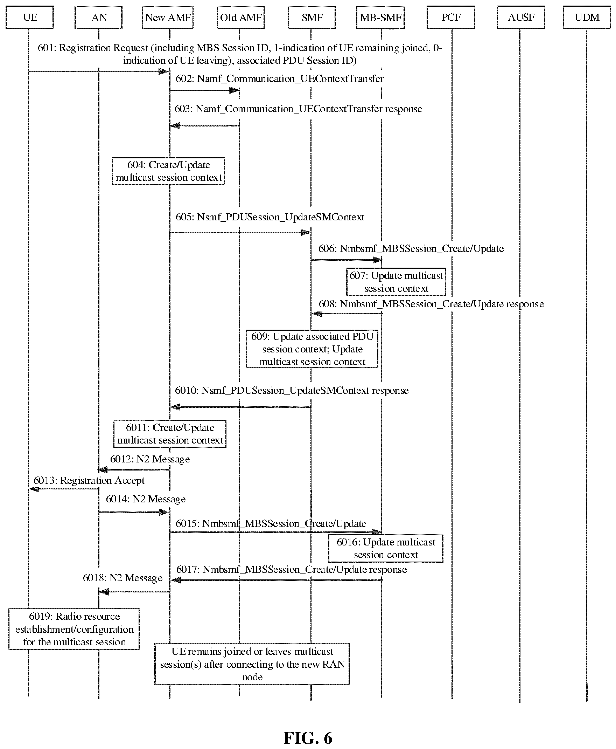

FIG. 6 is a fifth schematic flowchart of a method for processing a multicast broadcast session according to an embodiment of the present application. As shown in FIG. 6, an embodiment of the present application provides a method for processing a multicast broadcast session. In case that a user equipment (UE) remains joined in or leave a multicast broadcast session that the UE has joined after the UE accesses to a new RAN, the methods include the following steps.

Step 601: when the UE moves to a new registration area, requests to update UE capability, or requests network information, etc., the UE transmits a registration request to the network to request registration update. The registration request carries information of a multicast broadcast session that the UE has joined. The information of the multicast broadcast session includes one or more multicast broadcast service session identifiers (MBS session IDs), and may further include:
for each multicast broadcast session, a multicast broadcast session status indicating whether the UE remains in the joined status, where 1 indicates that the UE still remains joined the session, and 0 indicates that the UE leaves the session; and
an ID of a protocol data unit (PDU) session associated with the multicast broadcast session (associated PDU Session ID).

Step 602: in case that the network function entity serving the UE changes after the UE moves, a new AMF serving the UE after the UE moves determines whether the new AMF has UE context, the new AMF determines an old AMF serving the UE before the UE moves based on the UE ID, and the new AMF transmits a UE context transfer request (Namf_Communication_UEContextTransfer) to the old AMF.

Step 603: the old AMF transmits a response message to the UE context transfer request (Namf_Communication_UEContextTransfer Response) to the new AMF. The response message carries the UE context. The UE context includes the information of the PDU session currently established by the UE. The PDU session information includes the PDU session ID and the information of a session management function (SMF) serving the PDU session. For a PDU session associated with a multicast broadcast session, the PDU session information further includes the MBS session ID.

Step 604: the new AMF creates or updates the multicast broadcast session context based on the multicast broadcast session information in a UE registration request and the UE context. The new AMF may add information of the new RAN node serving the UE, such as RAN Node ID, to the multicast broadcast session context.

Step 605: the new AMF determines the PDU session associated with the multicast broadcast session and the SMF serving the PDU session based on the UE context.

The new AMF transmits a PDU session update session management context request (Nsmf_PDUSession_Update Session Management Context) to the SMF. The request message carries the multicast broadcast session information, which includes at least one MBS session ID, and may further include multicast session status of whether the UE to remain joined in or leave for each multicast broadcast session. The request message may further carry UE location information, such as the ID of the cell where the UE is located or a tracking area identifier (TAI).

Steps 606-609 are the same as steps 506-509.

Step 6010 is basically the same as step 5010. The difference is that for the multicast broadcast session whose multicast session status is 0, the multicast broadcast session status of the multicast broadcast session is 0 in a PDU session update session management context response message transmitted by the SMF to the new AMF.

For a multicast service only provided in a specific area, the SMF may determine whether the UE is currently in a multicast broadcast session service area (MBS service area) based on the UE location information and the MBS service area.

In case that the UE is not within the service area of the multicast broadcast session, the SMF rejects the UE of requesting to remain joined in the multicast broadcast session, that is, the multicast session status of the multicast broadcast session is set to 0 in the PDU session update session management context response message.

For a multicast broadcast session with a multicast session status being 0:
the SMF updates the information of the PDU session associated with the multicast broadcast session, that is, the MBS Session ID and a mapped unicast QoS information are deleted from the PDU session context; and in case that SMF has stored a UE list of UEs that join the multicast broadcast session, the SMF deletes the UE ID from the UE list; and
a response message from the SMF for the new AMF does not carry a multicast broadcast session management function (MB-SMF) ID, and the N2 information for the RAN does not carry the multicast broadcast session information.

Steps 606-609, 6011 and 6014-6019 are not performed.

Step 6011 is the same as step 5011.

Steps 6012-6013 are basically the same as steps 5012-5013. The differences are:
the registration accept message carries the MBS session ID and the multicast session status. For a multicast broadcast session with a multicast session status being 0, in case that the UE has not left the multicast broadcast session, the UE leaves the multicast broadcast session, that is, the context of the multicast broadcast session in the UE is deleted. For a multicast broadcast session with a multicast session status being 1, the UE remains or updates the context of the multicast broadcast session in the UE.

The N2 message transmitted from the AMF to the RAN does not carry the PDU Session Modification Command message, so the RAN will not transmit the PDU Session Modification Command message to the UE.

Steps 6014-6019 are the same as steps 5014-5019.

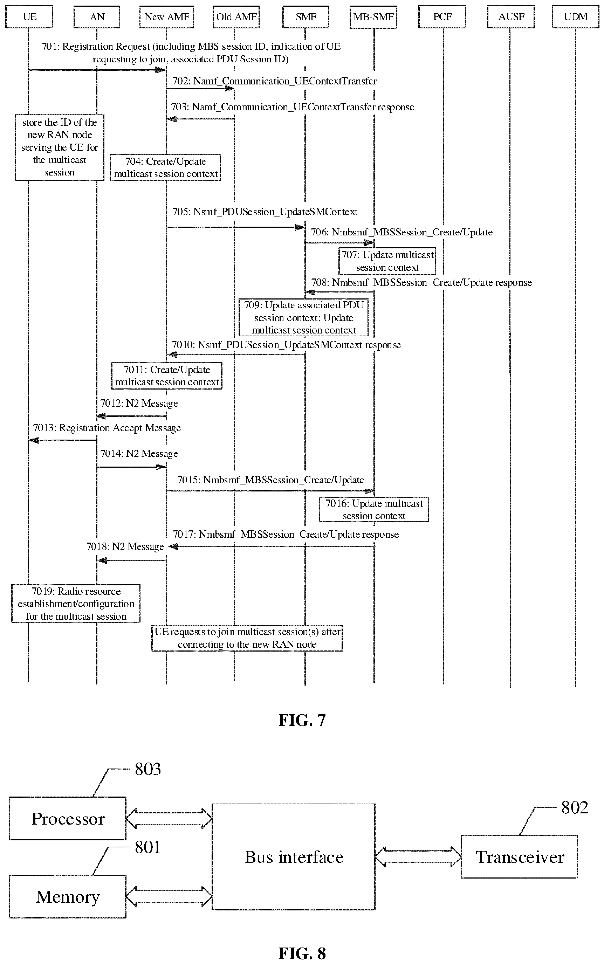

FIG. 7 is a sixth schematic flowchart of a method for processing a multicast broadcast session according to an embodiment of the present application. As shown in FIG. 7, an embodiment of the present application provides a method for processing a multicast broadcast session. In case that the user equipment (UE) requests to join a new multicast broadcast session after the UE is connected to a new radio access network (RAN), the method includes the following steps.

Step 701: when the UE moves to a new registration area, requests to update UE capability, or requests network information, etc., the UE transmits a registration request to the network to request registration update. The request message carries information of the multicast broadcast session that the UE requests to join, including one or more multicast broadcast service session identifiers (MBS session IDs) and a join request indication. It may further include an ID of a protocol data unit (PDU) session associated with the multicast broadcast session, a data network name (DNN) corresponding to the multicast broadcast session and/or single network slice selection assistance information (S-NSSAI).

Step 702: in case that the network function entity serving the UE changes after the UE moves, a new AMF serving the UE after the UE moves determines whether the new AMF has UE context, the new AMF determines an old AMF serving the UE before the UE moves based on the UE ID, and the new AMF transmits a UE context transfer request (Namf_Communication_UEContextTransfer) to the old AMF.

Step 703: the old AMF transmits a response message to the UE context transfer request (Namf_Communication_UEContextTransfer Response) to the new AMF. The response message carries the UE context. The UE context includes the information of the PDU session currently established by the UE. The information of the PDU session includes: the PDU session ID, information of a session management function (SMF) serving the PDU session, and may further include multicast broadcast session information, such as a multicast broadcast service (MBS) session identifier (ID).

Step 704: the new AMF creates or updates the multicast broadcast session context based on the multicast broadcast session information provided by the old AMF. The new AMF may add information of the new RAN node serving the UE, such as RAN Node ID, to the multicast broadcast session context.

Step 705: the new AMF determines the PDU session associated with the multicast broadcast session and the SMF serving the PDU session based on the multicast broadcast session information and/or the UE context information in a UE registration request. In an embodiment, it is determined as follows:
in case that the UE registration request includes the ID of the PDU session associated with the multicast broadcast session, the PDU session and the SMF serving the PDU session are selected;
in case that some PDU session information in the UE context includes multicast broadcast session information, the PDU session and the SMF serving the PDU session are selected; and
in case that all PDU session information in the UE context does not include multicast broadcast session information, based on the DNN and/or the S-NSSAI corresponding to the multicast broadcast session in a UE registration request, a PDU session belonging to the DNN and/or the S-NSSAI is selected as a PDU session associated with the multicast broadcast session, and the SMF serving the PDU session is also selected.

The new AMF transmits a PDU session update session management context request (Nsmf_PDUSession_Update Session Management Context) to the determined SMF. The request message carries the multicast broadcast session information that the UE requests to join, which includes one or more MBS session IDs, a join request indication, and it may further include the DNN and/or the S-NSSAI information corresponding to the multicast broadcast session. The request message may further carry UE location information, such as the ID of the cell where the UE is located or the tracking area identifier (TAI).

Steps 706-709 are the same as steps 506-509.

Step 7010 is basically the same as step 5010. The differences are:
for a multicast service only provided in a specific area, the SMF may determine whether the UE is currently in a multicast broadcast session service area (MBS service area) based on the UE location information and the MBS service area.

In case that the UE is not within the service area of the multicast broadcast session, the SMF rejects the UE of requesting to join the multicast broadcast session, that is, the response message for the new AMF carries the MBS session ID and an indication of rejecting the UE to join the multicast broadcast session. For this multicast broadcast session, steps 706-709, 7011, and 7014-7019 are not performed.

Step 7011 is the same as step 5011.

Steps 7012-7013 are basically the same as steps 5012-5013. The differences are:
the registration accept message carries the MBS session ID and information about accepting or rejecting the UE to join the multicast broadcast session. For a multicast broadcast session that accepts the UE, the UE stores the context of the multicast broadcast session. Storage includes creation or update. For a multicast broadcast session that rejects the UE to join, the UE deletes the context of the multicast broadcast session.

The N2 message transmitted from the AMF to the RAN does not carry the PDU Session Modification Command message, so the RAN will not transmit the PDU Session Modification Command message to the UE.

Steps 7014-7019 are the same as steps 5014-5019.

FIG. 8 is a schematic structural diagram of an access and mobility management function (AMF) network function entity according to an embodiment of the present application. As shown in FIG. 8, an AMF network function entity provided by an embodiment of the present application includes a memory 801, a transceiver 802, and a processor 803.

The memory 801 is used for storing a computer program; the transceiver 802 is used for transmitting and receiving data under the control of processor 803; and the processor 803 is used for reading the computer program stored in the memory 801 and performing the following operations:
receiving a first request transmitted from a user equipment (UE), where the first request is a registration request message or a service request message;
obtaining multicast broadcast session information of the UE based on the first request; and
performing a processing operation related to a multicast broadcast session based on the multicast broadcast session information.

In an embodiment, the transceiver 802 is used for receiving and transmitting data under the control of the processor 803.

In FIG. 8, the bus architecture may include any number of interconnected buses and bridges, one or more processors represented by processor 803 and various circuits of the memory represented by memory 801 are linked together. The bus architecture may also link together various other circuits such as peripherals, voltage regulators, and power management circuits. The bus interface provides an interface.

The transceiver 802 may be a plurality of elements, including a transmitter and a receiver, providing a unit for communicating with various other devices over transmission media, including wireless channels, wired channels, optical cables, and other transmission media. The processor 803 is responsible for managing the bus architecture and general processing, and the memory 801 may store data used by the processor 803 when performing operations.

The processor 803 may be a central processing unit (CPU), an application specific integrated circuit (ASIC), a field-programmable gate array (FPGA) or a complex programmable logic device (CPLD), the processor may also adopt a multi-core architecture.

In an embodiment, in case that the first request carries the multicast broadcast session information of the UE, the obtaining the multicast broadcast session information of the UE based on the first request includes:
obtaining the multicast broadcast session information of the UE from the first request.

In an embodiment, the obtaining the multicast broadcast session information of the UE based on the first request includes:
obtaining the multicast broadcast session information of the UE from a second AMF based on the first request, where the second AMF is a network function entity that provides service to the UE before the UE moves.

In an embodiment, the multicast broadcast session information includes a first multicast broadcast service (MBS) session identifier (ID) and/or indication information, where the indication information is used to indicate that the UE remains joined in, leaves, or requests to join a first multicast broadcast session, and the first multicast broadcast session is a multicast broadcast session that the UE has joined or a multicast broadcast session that the UE requests to join.

In an embodiment, the performing the processing operation related to the multicast broadcast session based on the multicast broadcast session information includes:
determining a first network function entity serving a first multicast broadcast session, where the first network function entity includes a session management function (SMF) or a multicast broadcast session management function (MB-SMF);
transmitting a second request to the first network function entity, where the second request carries the multicast broadcast session information; and
receiving a response message to the second request transmitted from the first network function entity.

In an embodiment, the receiving the response message to the second request transmitted from the first network function entity includes:
receiving the response message to the second request that carries the first MBS session ID and resource allocation request information transmitted from the first network function entity;
where the processor 803 is further used for reading the computer program stored in the memory 801 and performing the following operation:
   transmitting a third request to a radio access network function entity based on the response message to the second request, where the third request carries the first MBS session ID and the resource allocation request information, to make the radio access network function entity establish or update a resource for the first multicast broadcast session.

In an embodiment, the response message to the second request carries the first MBS session ID and the following information:
information about indicating the UE to leave the first multicast broadcast session; or,
information about rejecting the UE to join the first multicast broadcast session.

In an embodiment, the processor 803 is further used for reading the computer program stored in the memory 801 and performing the following operation:
transmitting a third request to a radio access network function entity, where the third request carries a first MBS session ID and information about indicating the UE to leave the first multicast broadcast session, to make the radio access network function entity delete an ID of the UE from first multicast broadcast session context.

In an embodiment, the multicast broadcast session information further includes at least one of the following ID information:
an ID of a protocol data unit (PDU) session associated with the first multicast broadcast session; or
an ID of the MB-SMF ID and/or an ID of the SMF serving the first multicast broadcast session;
where the determining the first network function entity serving the first multicast broadcast session includes:
   determining the first network function entity serving the first multicast broadcast session based on the at least one ID information.

It should be noted here that the above-mentioned AMF network function entity provided by the embodiment of the present application may implement all the method steps implemented by the above-mentioned method for processing the multicast broadcast session having the first AMF as the execution subject, and may achieve the same effect, the parts and beneficial effects that are the same as those in the method embodiment are not described in detail here.

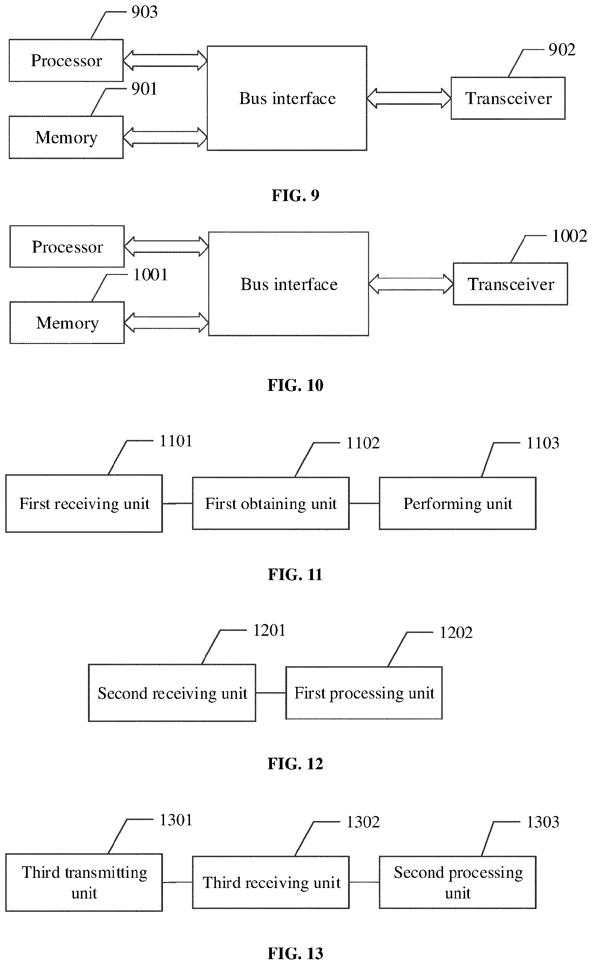

FIG. 9 is a schematic structural diagram of a session management function (SMF) network function entity according to an embodiment of the present application. As shown in FIG. 9, an SMF network function entity provided by an embodiment of the present application includes a memory 901, a transceiver 902 and a processor 903.

The memory 901 is used for storing a computer program; the transceiver 902 is used for transmitting and receiving data under the control of the processor 903; processor 903 is used for reading the computer program stored in the memory 901 and performing the following operations:
receiving a second request transmitted from a first access and mobility management function (AMF), where the second request carries multicast broadcast session information of a user equipment (UE), the multicast broadcast session information is obtained by the first AMF after the first AMF receives a first request transmitted from the UE, and the first request is a registration request message or a service request message; and
processing a multicast broadcast session of the UE based on the multicast broadcast session information carried by the second request.

In an embodiment, the transceiver 902 is used for receiving and transmitting data under the control of the processor 903.

In FIG. 9, the bus architecture may include any number of interconnected buses and bridges, one or more processors represented by processor 903 and various circuits of the memory represented by memory 901 are linked together. The bus architecture may also link together various other circuits such as peripherals, voltage regulators, and power management circuits. The bus interface provides an interface.

The transceiver 902 may be a plurality of elements, including a transmitter and a receiver, providing a unit for communicating with various other devices over transmission media, including wireless channels, wired channels, optical cables, and other transmission media. The processor 903 is responsible for managing the bus architecture and general processing, and the memory 901 may store data used by the processor 903 when performing operations.

The processor 903 may be a central processing unit (CPU), an application specific integrated circuit (ASIC), a field-programmable gate array (FPGA) or a complex programmable logic device (CPLD), the processor may also adopt a multi-core architecture.

In an embodiment, the multicast broadcast session information includes a first multicast broadcast service (MBS) session identifier (ID) and/or indication information, where the indication information is used to indicate that the UE remains joined in, leaves, or requests to join a first multicast broadcast session, and the first multicast broadcast session is a multicast broadcast session that the UE has joined or a multicast broadcast session that the UE requests to join.

In an embodiment, the processing the multicast broadcast session of the UE based on the multicast broadcast session information carried by the second request includes:
in case that the indication information is used to indicate that the UE requests to join the first multicast broadcast session and it is determined to accept the UE to join the first multicast broadcast session, establishing a corresponding relationship between an ID of the UE and the first MBS session ID, and transmitting a response message to the second request to the first AMF, where the response message to the second request carries information about accepting the UE to join the first multicast broadcast session; or,
in case that the indication information is used to indicate that the UE requests to join the first multicast broadcast session and the UE is not within a service area of the first multicast broadcast session, transmitting a response message to the second request to the first AMF, where the response message to the second request carries information about rejecting the UE to join the first multicast broadcast session; or,
in case that the indication information is used to indicate that the UE remains joined in the first multicast broadcast session and the UE is not within a service area of the first multicast broadcast session, transmitting a response message to the second request to the first AMF, where the response message to the second request carries information about indicating the UE to leave the first multicast broadcast session; or,
in case that the indication information is used to indicate that the UE leaves the first multicast broadcast session, deleting a corresponding relationship between an ID of the UE and the first MBS session ID.

In an embodiment, the processing the multicast broadcast session of the UE based on the multicast broadcast session information carried by the second request includes:
in case that the indication information is used to indicate that the UE requests to join the first multicast broadcast session and it is determined to accept the UE to join the first multicast broadcast session, storing an ID of a radio access network function entity serving the UE in first multicast broadcast session context.

It should be noted here that the above-mentioned SMF network function entity provided by the embodiment of the present application may implement all the method steps implemented by the above-mentioned method for processing the multicast broadcast session having the SMF as the execution subject, and may achieve the same effect, the parts and beneficial effects that are the same as those in the method embodiment are not described in detail here.

FIG. 10 is a schematic structural diagram of a user equipment (UE) according to an embodiment of the present application. As shown in FIG. 10, an embodiment of the present application provides a UE, including a memory 1001, a transceiver 1002 and a processor 1003.

The memory 1001 is used for storing a computer program; the transceiver 1002 is used for transmitting and receiving data under the control of the processor 1003; and the processor 1003 is used for reading the computer program stored in the memory 1001 and performing the following operations:
transmitting a first request to a first access and mobility management function (AMF), where the first request is a service request message or a registration request message;
receiving a response message to the first request transmitted from the first AMF, where the response message to the first request is a registration accept message or a service accept message, and the response message to the first request includes information about accepting the UE to join or leave a first multicast broadcast session, or information about indicating the UE to leave the first multicast broadcast session, or information about rejecting the UE to join the first multicast broadcast session; and
processing the first multicast broadcast session based on the response message to the first request.

In an embodiment, the transceiver 1002 is used for receiving and transmitting data under the control of the processor 1003.

In FIG. 10, the bus architecture may include any number of interconnected buses and bridges, one or more processors represented by processor 1003 and various circuits of the memory represented by memory 1001 are linked together. The bus architecture may also link together various other circuits such as peripherals, voltage regulators, and power management circuits. The bus interface provides an interface.

The transceiver 1002 may be a plurality of elements, including a transmitter and a receiver, providing a unit for communicating with various other devices over transmission media, including wireless channels, wired channels, optical cables, and other transmission media. The processor 1003 is responsible for managing the bus architecture and general processing, and the memory 1001 may store data used by the processor 1003 when performing operations.

The processor 1003 may be a central processing unit (CPU), an application specific integrated circuit (ASIC), a field-programmable gate array (FPGA) or a complex programmable logic device (CPLD), the processor may also adopt a multi-core architecture.

In an embodiment, the first request carries multicast broadcast session information, where the multicast broadcast session information includes a first multicast broadcast service (MBS) session identifier (ID) and indication information, and the first multicast broadcast session is a multicast broadcast session that the UE has joined or a multicast broadcast session that the UE requests to join, and the indication information is used to indicate that the UE remains joined in, leaves, or requests to join the first multicast broadcast session.

In an embodiment, the processing the first multicast broadcast session based on the response message to the first request includes:
in case that the response message to the first request carries information about accepting the UE to join the first multicast broadcast session, storing first multicast broadcast session context; or,
in case that the response message to the first request carries information about rejecting the UE to join the first multicast broadcast session or information about indicating the UE to leave the first multicast broadcast session, deleting first multicast broadcast session context.

In an embodiment, the receiving the response message to the first request transmitted from the first AMF includes:
receiving the response message to the first request transmitted from the first AMF and forwarded by a radio access network function entity;
where the processor 1003 is further used for reading the computer program stored in the memory 1001 and performing the following operations:
   in case that the response message to the first request carries information about accepting the UE to join the first multicast broadcast session, establishing or updating a resource for the first multicast broadcast session; and
   receiving service data of the first multicast broadcast session by using the resource.

In an embodiment, the receiving the service data of the first multicast broadcast session by using the resource includes:
in case that the radio access network function entity does not support multicast service, receiving the service data of the first multicast broadcast session in a unicast manner by using the resource; or,
in case that the radio access network function entity supports multicast service, receiving the service data of the first multicast broadcast session in a multicast manner by using the resource.

It should be noted here that the above-mentioned UE provided by the embodiment of the present application may implement all the method steps implemented by the above-mentioned method for processing the multicast broadcast session having the UE as the execution subject, and may achieve the same effect, the parts and beneficial effects that are the same as those in the method embodiment are not described in detail here.

FIG. 11 is a first schematic structural diagram of an apparatus for processing a multicast broadcast session according to an embodiment of the present application. As shown in FIG. 11, an embodiment of the present application provides an apparatus for processing a multicast broadcast session, which includes:
a first receiving unit 1101, used for receiving a first request transmitted from a user equipment (UE), where the first request is a registration request message or a service request message;
a first obtaining unit 1102, used for obtaining multicast broadcast session information of the UE based on the first request; and
a performing unit 1103, used for performing a processing operation related to the multicast broadcast session based on the multicast broadcast session information.

In an embodiment, in case that the first request carries the multicast broadcast session information of the UE, the first obtaining unit 1102 includes:
a first obtaining module, used for obtaining the multicast broadcast session information of the UE from the first request.

In an embodiment, the first obtaining unit 1102 includes:
a second obtaining module, used for obtaining the multicast broadcast session information of the UE from a second AMF based on the first request, where the second AMF is a network function entity that provides service to the UE before the UE moves, and the first AMF is a network function entity that provides service to the UE after the UE moves.

In an embodiment, the multicast broadcast session information includes a first multicast broadcast service (MBS) session identifier (ID) and/or indication information, where the indication information is used to indicate that the UE remains joined in, leaves, or requests to join a first multicast broadcast session, and the first multicast broadcast session is a multicast broadcast session that the UE has joined or a multicast broadcast session that the UE requests to join.

In an embodiment, the performing unit 1103 includes:
a first determining module, used for determining a first network function entity serving a first multicast broadcast session, where the first network function entity includes a session management function (SMF) or a multicast broadcast session management function (MB-SMF);
a first transmitting module, used for transmitting a second request to the first network function entity, where the second request carries the multicast broadcast session information; and
a first receiving module, used for receiving a response message to the second request transmitted from the first network function entity.

In an embodiment, the first receiving unit 1101 includes:
a second receiving module, used for receiving the response message to the second request that carries a first MBS session ID and resource allocation request information transmitted from the first network function entity;
the apparatus further includes:
   a first transmitting unit, used for transmitting a third request to a radio access network function entity based on the response message to the second request, where the third request carries the first MBS session ID and the resource allocation request information, to make the radio access network function entity establish or update a resource for the first multicast broadcast session.

In an embodiment, the response message to the second request carries the first MBS session ID and the following information:
information about indicating the UE to leave the first multicast broadcast session; or,
information about rejecting the UE to join the first multicast broadcast session.

In an embodiment, the apparatus further includes:
a second transmitting unit, used for transmitting a third request to a radio access network function entity, where the third request carries a first MBS session ID and information about indicating the UE to leave the first multicast broadcast session, to make the radio access network function entity delete an ID of the UE from first multicast broadcast session context.

In an embodiment, the multicast broadcast session information further includes at least one of the following ID information:
an ID of a protocol data unit (PDU) session associated with the first multicast broadcast session; or
an ID of the MB-SMF ID and/or an ID of the SMF serving the first multicast broadcast session;
where the determining the first network function entity serving the first multicast broadcast session includes:
   determining the first network function entity serving the first multicast broadcast session based on the at least one ID information.

It should be noted here that the above-mentioned apparatus for processing a multicast broadcast session provided by the embodiment of the present application may implement all the method steps implemented by the above-mentioned method for processing the multicast broadcast session having the first AMF as the execution subject, and may achieve the same effect, the parts and beneficial effects that are the same as those in the method embodiment are not described in detail here.

FIG. 12 is a second schematic structural diagram of the apparatus for processing a multicast broadcast session according to an embodiment of the present application. As shown in FIG. 12, an embodiment of the present application provides an apparatus for processing a multicast broadcast session, which includes:
a second receiving unit 1201, used for receiving a second request transmitted from a first access and mobility management function (AMF), where the second request carries multicast broadcast session information of a user equipment (UE), the multicast broadcast session information is obtained by the first AMF after the first AMF receives a first request transmitted from the UE, and the first request is a registration request message or a service request message; and
a first processing unit 1202, used for processing a multicast broadcast session of the UE based on the multicast broadcast session information carried by the second request.

In an embodiment, the multicast broadcast session information includes a first multicast broadcast service (MBS) session identifier (ID) and/or indication information, where the indication information is used to indicate that the UE remains joined in, leaves, or requests to join a first multicast broadcast session, and the first multicast broadcast session is a multicast broadcast session that the UE has joined or a multicast broadcast session that the UE requests to join.

In an embodiment, the first processing unit 1202 includes:
a first establishing module, used for, in case that the indication information is used to indicate that the UE requests to join the first multicast broadcast session and it is determined to accept the UE to join the first multicast broadcast session, establishing a corresponding relationship between an ID of the UE and the first MBS session ID; a second transmitting module, used for transmitting a response message to the second request to the first AMF, where the response message to the second request carries information about accepting the UE to join the first multicast broadcast session; or,
a third transmitting module, used for, in case that the indication information is used to indicate that the UE requests to join the first multicast broadcast session and the UE is not within service area of the first multicast broadcast session, transmitting a response message to the second request to the first AMF, where the response message to the second request carries information about rejecting the UE to join the first multicast broadcast session; or,
a fourth transmitting module, used for in case that the indication information is used to indicate that the UE remains joined in the first multicast broadcast session and the UE is not within a service area of the first multicast broadcast session, transmitting a response message to the second request to the first AMF, where the response message to the second request carries information about indicating the UE to leave the first multicast broadcast session; or,
a first deleting module, used for in case that the indication information is used to indicate that the UE leaves the first multicast broadcast session, deleting a corresponding relationship between an ID of the UE and the first MBS session ID.

In an embodiment, the first processing unit 1202 includes:
a first storing module, used for, in case that the indication information is used to indicate that the UE requests to join the first multicast broadcast session and it is determined to accept the UE to join the first multicast broadcast session, storing an ID of a radio access network function entity serving the UE in first multicast broadcast session context.

It should be noted here that the above-mentioned apparatus for processing a multicast broadcast session provided by the embodiment of the present application may implement all the method steps implemented by the above-mentioned method for processing the multicast broadcast session having the SMF as the execution subject, and may achieve the same effect, the parts and beneficial effects that are the same as those in the method embodiment are not described in detail here.

FIG. 13 is a third schematic structural diagram of an apparatus for processing a multicast broadcast session according to an embodiment of the present application. As shown in FIG. 13, an embodiment of the present application provides an apparatus for processing a multicast broadcast session, which includes:
a third transmitting unit 1301, used for transmitting a first request to a first access and mobility management function (AMF), where the first request is a service request message or a registration request message;
a third receiving unit 1302, used for receiving a response message to the first request transmitted from the first AMF, where the response message to the first request is a registration accept message or a service accept message, and the response message to the first request includes information about accepting a user equipment (UE) to join or leave a first multicast broadcast session, or information about indicating the UE to leave the first multicast broadcast session, or information about rejecting the UE to join the first multicast broadcast session; and
a second processing unit 1303, used for processing the first multicast broadcast session based on the response message to the first request.

In an embodiment, the first request carries multicast broadcast session information, where the multicast broadcast session information includes a first multicast broadcast service (MBS) session identifier (ID) and indication information, and the first multicast broadcast session is a multicast broadcast session that the UE has joined or a multicast broadcast session that the UE requests to join, and the indication information is used to indicate that the UE remains joined in, leaves, or requests to join the first multicast broadcast session.

In an embodiment, the second processing unit 1303 includes:
a second storing module, used for, in case that the response message to the first request carries information about accepting the UE to join the first multicast broadcast session, storing first multicast broadcast session context; and
a second deleting module, used for, in case that the response message to the first request carries information about rejecting the UE to join the first multicast broadcast session or information about indicating the UE to leave the first multicast broadcast session, deleting first multicast broadcast session context.

In an embodiment, the third receiving unit 1302 includes:
a third receiving module, used for receiving the response message to the first request transmitted from the first AMF and forwarded by a radio access network function entity;
the apparatus further includes:
   an establishing unit, used for, in case that the response message to the first request carries information about accepting the UE to join the first multicast broadcast session, establishing or updating a resource for the first multicast broadcast session; and
   a fourth receiving unit, used for receiving service data of the first multicast broadcast session by using the resource.

In an embodiment, the fourth receiving unit includes:
a fourth receiving module, used for, in case that a radio access network function entity does not support multicast broadcast service, receiving the service data of the first multicast broadcast session in a unicast manner by using the resource;
a fifth receiving module, used for, in case that a radio access network function entity supports multicast broadcast service, receiving the service data of the first multicast broadcast session in a multicast broadcast manner by using the resource.

It should be noted here that the above-mentioned apparatus for processing a multicast broadcast session provided by the embodiment of the present application may implement all the method steps implemented by the above-mentioned method for processing the multicast broadcast session having the UE as the execution subject, and may achieve the same effect, the parts and beneficial effects that are the same as those in the method embodiment are not described in detail here.

It should be noted that, the division of units in the embodiments of the present application is schematic, and is only a logical function division, and other division manners may be performed in actual implementation. In an embodiment, the functional units in the various embodiments of the present application may be integrated into one processing unit/module, or each unit/module may exist alone physically, or two or more units/modules may be integrated into one unit/module. The aforementioned integrated unit/module may be implemented in the form of hardware or software functional unit.

In case that the integrated unit/module is implemented in the form of a software functional unit/module and sold or used as an independent product, it may be stored in a processor readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as USB flash disk, mobile hard disk, read-only memory (ROM), random access memory (RAM), magnetic disk, or optical disk.

An embodiment of the present application further provides a processor-readable storage medium, where the processor-readable storage medium stores a computer program, and the computer program, when executed by a processor, causes the processor to perform steps of the above-mentioned methods for processing the multicast broadcast session provided by each embodiment, including:
receiving a first request transmitted from a user equipment (UE), where the first request is a registration request message or a service request message;
obtaining multicast broadcast session information of the UE based on the first request; and
performing a processing operation related to a multicast broadcast session based on the multicast broadcast session information.

Or, the method may include:
receiving a second request transmitted from a first access and mobility management function (AMF), where the second request carries multicast broadcast session information of a user equipment (UE), the multicast broadcast session information is obtained by the first AMF after the first AMF receives a first request transmitted from the UE, and the first request is a registration request message or a service request message; and
processing a multicast broadcast session of the UE based on the multicast broadcast session information carried by the second request.

Or, the method may include:
transmitting a first request to a first access and mobility management function (AMF), where the first request is a service request message or a registration request message;
receiving a response message to the first request transmitted from the first AMF, where the response message to the first request is a registration accept message or a service accept message, and the response message to the first request includes information about accepting a user equipment (UE) to join or leave a first multicast broadcast session, or information about indicating the UE to leave the first multicast broadcast session, or information about rejecting the UE to join the first multicast broadcast session; and
processing the first multicast broadcast session based on the response message to the first request.

It should be noted that the processor readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, non-volatile memory (NAND FLASH), solid-state drive (SSD)), etc.

In addition, it should be noted that the term "and/or" in the embodiment of the present application describes the association relationship of associated objects, indicating three relationships. For example, A and/or B may mean three cases: A exists alone, A and B exists simultaneously, and B exists alone. The character "/" generally indicates that the related objects are in an "or" relationship.

The terms "first", "second", "object", etc. in the description and claims of the present application are used to distinguish similar objects and are not used to describe a specific order or sequence. It may be understood that data used in this way is interchangeable under appropriate circumstances so that the embodiments of the present application may be practiced in an order other than those illustrated or described herein, and objects distinguished by "first", "second", "target" are usually of one type, and the number of objects is not limited. For example, the first object may be one or multiple.

In the embodiments of the present application, the term "multiple" refers to two or more than two, and other quantifiers are similar to it.

The solutions according to the embodiments of the present application may be applicable to various systems, especially to 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal may be a mobile terminal device, such as a mobile phone (or cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session-initiated protocol (SIP) phone, a wireless local loop (WLL) station, a personal digital assistant (PDA) and other devices. A wireless terminal device may also be called a system, a subscriber unit, a subscriber station, a mobile station, a mobile platform, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal. Depending on the specific scenario, the base station may be called an access point, or a device communicating with a wireless terminal device through one or more sectors on the air interface in the access network, or other names. The network device may be used for exchanging received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), or may be a node B in a wide-band code division multiple access (WCDMA), or may be an evolutional NodeB (eNB or e-Node B) in a long term evolution (LTE) system, or may be a 5G gNB in 5G network architecture (next generation system), or may be a home evolved node B (HeNB), a relay node, a femto, or a pico, etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by processor-executable instructions. These processor-executable instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may be stored in processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. Thus, provided that these modifications and variations of the present application are within the scope of the claims of the present application and their equivalents, the present application is also intended to cover such modifications and variations.

## Claims

1. A method for processing a multicast broadcast session, applied to a first access and mobility management function, AMF, comprising:
receiving a first request transmitted from a user equipment, UE, wherein the first request is a registration request message or a service request message;
obtaining multicast broadcast session information of the UE based on the first request; and
performing a processing operation related to a multicast broadcast session based on the multicast broadcast session information.

2. The method of claim 1, wherein in case that the first request carries the multicast broadcast session information of the UE, the obtaining the multicast broadcast session information of the UE based on the first request comprises:
obtaining the multicast broadcast session information of the UE from the first request.

3. The method of claim 1, wherein the obtaining the multicast broadcast session information of the UE based on the first request comprises:
obtaining the multicast broadcast session information of the UE from a second AMF based on the first request, wherein the second AMF is a network function entity that provides service to the UE before the UE moves, and the first AMF is a network function entity that provides service to the UE after the UE moves.

4. The method of any one of claims 1 to 3, wherein the multicast broadcast session information comprises a first multicast/broadcast service, MBS, session identifier, ID, and/or indication information, wherein the indication information is used to indicate that the UE remains joined in, leaves, or requests to join a first multicast broadcast session, and the first multicast broadcast session is a multicast broadcast session that the UE has joined or a multicast broadcast session that the UE requests to join.

5. The method of claim 1, wherein the performing the processing operation related to the multicast broadcast session based on the multicast broadcast session information comprises:
determining a first network function entity serving a first multicast broadcast session, wherein the first network function entity comprises a session management function, SMF, or a multicast broadcast session management function, MB-SMF;
transmitting a second request to the first network function entity, wherein the second request carries the multicast broadcast session information; and
receiving a response message to the second request transmitted from the first network function entity.

6. The method of claim 5, wherein the receiving the response message to the second request transmitted from the first network function entity comprises:
receiving the response message to the second request that carries a first MBS session ID and resource allocation request information transmitted from the first network function entity;wherein the method further comprises:
transmitting a third request to a radio access network function entity based on the response message to the second request, wherein the third request carries the first MBS session ID and the resource allocation request information, to make the radio access network function entity establish or update a resource for the first multicast broadcast session.

7. The method of claim 5, wherein the response message to the second request carries the first MBS session ID and the following information:
information about indicating the UE to leave the first multicast broadcast session; or,
information about rejecting the UE to join the first multicast broadcast session.

8. The method of claim 5, further comprising:
transmitting a third request to a radio access network function entity, wherein the third request carries a first MBS session ID and information about indicating the UE to leave the first multicast broadcast session, to make the radio access network function entity delete an ID of the UE from first multicast broadcast session context.

9. The method of claim 5, wherein the multicast broadcast session information further comprises at least one of the following ID information:
an ID of a protocol data unit, PDU, session associated with a first multicast broadcast session; or
an ID of the MB-SMF and/or an ID of the SMF serving the first multicast broadcast session;
wherein the determining the first network function entity serving the first multicast broadcast session comprises:
determining the first network function entity serving the first multicast broadcast session based on the at least one ID information.

10. A method for processing a multicast broadcast session, applied to a session management function, SMF, comprising:
receiving a second request transmitted from a first access and mobility management function, AMF, wherein the second request carries multicast broadcast session information of a user equipment, UE, the multicast broadcast session information is obtained by the first AMF after the first AMF receives a first request transmitted from the UE, and the first request is a registration request message or a service request message; and
processing a multicast broadcast session of the UE based on the multicast broadcast session information carried by the second request.

11. The method of claim 10, wherein the multicast broadcast session information comprises a first multicast/broadcast service, MBS, session identifier, ID, and/or indication information, wherein the indication information is used to indicate that the UE remains joined in, leaves, or requests to join a first multicast broadcast session, and the first multicast broadcast session is a multicast broadcast session that the UE has joined or a multicast broadcast session that the UE requests to join.

12. The method of claim 11, wherein the processing the multicast broadcast session of the UE based on the multicast broadcast session information carried by the second request comprises:
in case that the indication information is used to indicate that the UE requests to join the first multicast broadcast session and it is determined to accept the UE to join the first multicast broadcast session, establishing a corresponding relationship between an ID of the UE and the first MBS session ID, and transmitting a response message to the second request to the first AMF, wherein the response message to the second request carries information about accepting the UE to join the first multicast broadcast session; or,
in case that the indication information is used to indicate that the UE requests to join the first multicast broadcast session and the UE is not within a service area of the first multicast broadcast session, transmitting a response message to the second request to the first AMF, wherein the response message to the second request carries information about rejecting the UE to join the first multicast broadcast session; or,
in case that the indication information is used to indicate that the UE remains joined in the first multicast broadcast session and the UE is not within a service area of the first multicast broadcast session, transmitting a response message to the second request to the first AMF, wherein the response message to the second request carries information about indicating the UE to leave the first multicast broadcast session; or,
in case that the indication information is used to indicate that the UE leaves the first multicast broadcast session, deleting a corresponding relationship between an ID of the UE and the first MBS session ID.

13. The method of claim 11, wherein the processing the multicast broadcast session of the UE based on the multicast broadcast session information carried by the second request comprises:
in case that the indication information is used to indicate that the UE requests to join the first multicast broadcast session and it is determined to accept the UE to join the first multicast broadcast session, storing an ID of a radio access network function entity serving the UE in first multicast broadcast session context.

14. A method for processing a multicast broadcast session, applied to a user equipment, UE, comprising:
transmitting a first request to a first access and mobility management function, AMF, wherein the first request is a service request message or a registration request message;
receiving a response message to the first request transmitted from the first AMF, wherein the response message to the first request is a registration accept message or a service accept message, and the response message to the first request comprises information about accepting the UE to join or leave a first multicast broadcast session, or information about indicating the UE to leave the first multicast broadcast session, or information about rejecting the UE to join the first multicast broadcast session; and
processing the first multicast broadcast session based on the response message to the first request.

15. The method of claim 14, wherein the first request carries multicast broadcast session information, wherein the multicast broadcast session information comprises a first multicast/broadcast service, MBS, session identifier, ID, and indication information, and the first multicast broadcast session is a multicast broadcast session that the UE has joined or a multicast broadcast session that the UE requests to join, and the indication information is used to indicate that the UE remains joined in, leaves, or requests to join the first multicast broadcast session.

16. The method of claim 14, wherein the processing the first multicast broadcast session based on the response message to the first request comprises:
in case that the response message to the first request carries information about accepting the UE to join the first multicast broadcast session, storing first multicast broadcast session context; or,
in case that the response message to the first request carries information about rejecting the UE to join the first multicast broadcast session or information about indicating the UE to leave the first multicast broadcast session, deleting first multicast broadcast session context.

17. The method of claim 14, wherein the receiving the response message to the first request transmitted from the first AMF comprises:
receiving the response message to the first request transmitted from the first AMF and forwarded by a radio access network function entity;
wherein the method further comprises:
in case that the response message to the first request carries information about accepting the UE to join the first multicast broadcast session, establishing or updating a resource for the first multicast broadcast session; and
receiving service data of the first multicast broadcast session by using the resource.

18. The method of claim 17, wherein the receiving the service data of the first multicast broadcast session by using the resource comprises:
in case that a radio access network function entity does not support multicast/broadcast service, receiving the service data of the first multicast broadcast session in a unicast manner by using the resource; or,
in case that a radio access network function entity supports multicast/broadcast service, receiving the service data of the first multicast broadcast session in a multicast/broadcast manner by using the resource.

19. An access and mobility management function, AMF, network function entity, comprising a memory, a transceiver, and a processor,
wherein the memory is used for storing a computer program; the transceiver is used for transmitting and receiving data under a control of the processor; and the processor is used for reading the computer program stored in the memory and performing the following operations:
receiving a first request transmitted from a user equipment, UE, wherein the first request is a registration request message or a service request message;
obtaining multicast broadcast session information of the UE based on the first request; and
performing a processing operation related to a multicast broadcast session based on the multicast broadcast session information.

20. The AMF network function entity of claim 19, wherein the obtaining the multicast broadcast session information of the UE based on the first request comprises:
obtaining the multicast broadcast session information of the UE from a second AMF based on the first request, wherein the second AMF is a network function entity that provides service to the UE before the UE moves.

21. The AMF network function entity of claim 19, wherein the performing the processing operation related to the multicast broadcast session based on the multicast broadcast session information comprises:
determining a first network function entity serving a first multicast broadcast session, wherein the first network function entity comprises a session management function, SMF, or a multicast broadcast session management function, MB-SMF;
transmitting a second request to the first network function entity, wherein the second request carries the multicast broadcast session information; and
receiving a response message to the second request transmitted from the first network function entity.

22. The AMF network function entity of claim 21, wherein the receiving the response message to the second request transmitted from the first network function entity comprises:
receiving the response message to the second request that carries a first multicast/broadcast service, MBS, session identifier, ID, and resource allocation request information transmitted from the first network function entity;
wherein the processor is further used for reading the computer program stored in the memory and performing the following operations:
transmitting a third request to a radio access network function entity based on the response message to the second request, wherein the third request carries the first MBS session ID and the resource allocation request information, to make the radio access network function entity establish or update a resource for the first multicast broadcast session.

23. A session management function, SMF, network function entity, comprising a memory, a transceiver and a processor,
wherein the memory is used for storing a computer program; the transceiver is used for transmitting and receiving data under a control of the processor; and the processor is used for reading the computer program stored in the memory and performing the following operations:
receiving a second request transmitted from a first access and mobility management function, AMF, wherein the second request carries multicast broadcast session information of a user equipment, UE, the multicast broadcast session information is obtained by the first AMF after the first AMF receives a first request transmitted from the UE, and the first request is a registration request message or a service request message; and
processing a multicast broadcast session of the UE based on the multicast broadcast session information carried by the second request.

24. A user equipment, UE, comprising a memory, a transceiver and a processor,
wherein the memory is used for storing a computer program; the transceiver is used for transmitting and receiving data under a control of the processor; and the processor is used for reading the computer program stored in the memory and performing the following operations:
transmitting a first request to a first access and mobility management function, AMF, wherein the first request is a service request message or a registration request message;
receiving a response message to the first request transmitted from the first AMF, wherein the response message to the first request is a registration accept message or a service accept message, and the response message to the first request comprises information about accepting the UE to join or leave a first multicast broadcast session, or information about indicating the UE to leave the first multicast broadcast session, or information about rejecting the UE to join the first multicast broadcast session; and
processing the first multicast broadcast session based on the response message to the first request.

25. The UE of claim 24, wherein the first request carries multicast broadcast session information, wherein the multicast broadcast session information comprises a first multicast/broadcast service, MBS, session identifier, ID, and indication information, and the first multicast broadcast session is a multicast broadcast session that the UE has joined or a multicast broadcast session that the UE requests to join, and the indication information is used to indicate that the UE remains joined in, leaves, or requests to join the first multicast broadcast session.

26. The UE of claim 24, wherein the processing the first multicast broadcast session based on the response message to the first request comprises:
in case that the response message to the first request carries information about accepting the UE to join the first multicast broadcast session, storing first multicast broadcast session context; or,
in case that the response message to the first request carries information about rejecting the UE to join the first multicast broadcast session or information about indicating the UE to leave the first multicast broadcast session, deleting first multicast broadcast session context.

27. The UE of claim 24, wherein the receiving the response message to the first request transmitted from the first AMF comprises:
receiving the response message to the first request transmitted from the first AMF and forwarded by a radio access network function entity;
wherein the processor is further used for reading the computer program stored in the memory and performing the following operations:
in case that the response message to the first request carries information about accepting the UE to join the first multicast broadcast session, establishing or updating a resource for the first multicast broadcast session; and
receiving service data of the first multicast broadcast session by using the resource.

28. The UE of claim 27, wherein the receiving the service data of the first multicast broadcast session by using the resource comprises:
in case that a radio access network function entity does not support multicast/broadcast service, receiving the service data of the first multicast broadcast session in a unicast manner by using the resource; or,
in case that a radio access network function entity supports multicast/broadcast service, receiving the service data of the first multicast broadcast session in a multicast/broadcast manner by using the resource.

29. An apparatus for processing a multicast broadcast session, comprising:
a first receiving unit, used for receiving a first request transmitted from a user equipment, UE, wherein the first request is a registration request message or a service request message;
a first obtaining unit, used for obtaining multicast broadcast session information of the UE based on the first request; and
a performing unit, used for performing a processing operation related to a multicast broadcast session based on the multicast broadcast session information.

30. An apparatus for processing a multicast broadcast session, comprising:
a second receiving unit, used for receiving a second request transmitted from a first access and mobility management function, AMF, wherein the second request carries multicast broadcast session information of a user equipment, UE, the multicast broadcast session information is obtained by the first AMF after the first AMF receives a first request transmitted from the UE, and the first request is a registration request message or a service request message; and
a first processing unit, used for processing a multicast broadcast session of the UE based on the multicast broadcast session information carried by the second request.

31. An apparatus for processing a multicast broadcast session, comprising:
a third transmitting unit, used for transmitting a first request to a first access and mobility management function, AMF, wherein the first request is a service request message or a registration request message;
a third receiving unit, used for receiving a response message to the first request transmitted from the first AMF, wherein the response message to the first request is a registration accept message or a service accept message, and the response message to the first request comprises information about accepting a user equipment, UE, to join or leave a first multicast broadcast session, or information about indicating the UE to leave the first multicast broadcast session, or information about rejecting the UE to join the first multicast broadcast session; and
a second processing unit, used for processing the first multicast broadcast session based on the response message to the first request.

32. A computer-readable storage medium storing a computer program, wherein the computer program, when executed by a processor, causes the processor to perform the method of any one of claims 1 to 18.
